# EUROPEAN PATENT SPECIFICATION

(11) **EP 3 456 578 B1**
(45) Date of publication and mention of the grant of the patent: **24.06.2020**
(21) Application number: 17795804.8
(22) Date of filing: 06.03.2017
(51) Int. Cl.: B60L 5/00, B60M 7/00, B62J 99/00, H02J 7/00, H02J 50/10, H02J 50/70, B62M 6/40

(54) **POWER RECEPTION DEVICE, VEHICLE, AND STRADDLED VEHICLE**
ENERGIEAUFNAHMEVORRICHTUNG, FAHRZEUG UND SATTELFAHRZEUG
DISPOSITIF DE RÉCEPTION D'ÉNERGIE, VÉHICULE ET VÉHICULE DU TYPE À SELLE

(30) Priority: 10.05.2016 JP 2016094330
(43) Date of publication of application: 20.03.2019
(73) Proprietor: Yamaha Hatsudoki Kabushiki Kaisha, Iwata-shi, Shizuoka 438-8501 (JP)
(72) Inventor: MIYAZAKI, Toshinori, Iwata-shi Shizuoka 438-8501 (JP); NAKAMURA, Kazuto, Iwata-shi Shizuoka 438-8501 (JP)
(74) Representative: Zimmermann, Tankred Klaus
(86) International application number: PCT/JP2017/008694
(87) International publication number: WO 2017/195443

(56) References cited:
- EP-A1- 2 953 146
- WO-A1-2015/075853
- WO-A2-2014/174361
- JP-A- 2012 039 831
- JP-A- 2014 183 291
- JP-A- 2014 217 213
- JP-A- 2015 104 151
- US-A1- 2015 069 833
- US-A1- 2015 136 499

## Description

### TECHNICAL FIELD

The present teaching relates to a power reception device, and specifically, relates to a power reception device including a solenoid coil and an electromagnetic shield.

### BACKGROUND ART

Straddled vehicles, such as bicycles, motorcycles, or the like, have been widely used as transportation apparatuses that can be easily used. In recent years, spread of straddled vehicles which include a motor that generates a driving force that is transmitted to wheels has been advanced. As such a straddled vehicle, for example, there is an electric power-assisted bicycle in which a pedal stepping force of a rider is assisted by a driving force of a motor.

The electric power-assisted bicycle includes a battery that supplies power to the motor. The battery is arranged so as to be removable. The battery is charged using a commercially available power supply source. In charging the battery, an exclusive adaptor is used.

For the electric power-assisted bicycle, in general, charging of the battery is performed at home. However, it is convenient if it is possible to charge the battery, for example, in a public parking lot or the like. In particular, if a wireless power transmission system is installed in a parking lot, it is possible to charge the battery without separately performing an operation for charging.

In Japanese Patent Application Publication No. 2012-34487, an electric power-assisted bicycle in which a battery is chargeable by non-contact power supply is described. In this patent publication, a power reception coil is arranged at a front basket included in the electric power-assisted bicycle. The power reception coil is annularly formed. The power transmission coil is arranged at a post provided in a parking lot. Similar to the power reception coil, the power transmission coil is also annularly formed. Using a magnetic resonance between the power reception coil and the power transmission coil, power is transmitted from the power transmission coil to the power reception coil. Power that has been transmitted is stored in the battery.

A coil that is used for non-contact power supply is not limited to an annular coil. For example, a solenoid coil may be used. In Japanese Patent Application Publication No. 2014-166070, or WO2014/174361, a power transmission system that performs non-contact power supply using a solenoid coil is described.

### SUMMARY OF INVENTION

If a length of a solenoid coil in an axial direction and a radius of a circular coil are the same and an electric current of the same magnitude flows in the coils, the solenoid coil is able to radiate a magnetic flux farther than the circular coil. Therefore, even when a power transmission coil is distant from a power reception coil, power can be efficiently transmitted. However, that is not enough in terms of further increasing power transmission efficiency.

It is an object of the present teaching to further increase, when charging is performed by non-contact power supply using a solenoid coil, power transmission efficiency while making use of advantages of the solenoid coil.

A power reception device according to an embodiment of the present teaching includes a solenoid power reception coil and an electromagnetic shield. The solenoid power reception coil is configured to generate an electric current flow due to a change in magnetic flux that is generated by electrical conduction to a power transmission coil provided in a power transmission device. The electromagnetic shield is arranged such that a gap is formed between the electromagnetic shield and the solenoid power reception coil. The electromagnetic shield includes a flat plate-shaped main body and a sidewall. The sidewall is arranged around the solenoid power reception coil when viewed from a direction that is perpendicular to a surface of the main body. A direction that is perpendicular to an axial line of the solenoid power reception coil and also is in parallel to the main body is a first direction. A direction in which the axial line of the solenoid power reception coil extends is a second direction. A direction that is perpendicular to each of the first direction and the second direction is a third direction. The sidewall includes a pair of first sidewalls and a pair of second sidewalls. The pair of first sidewalls is located at both sides of the solenoid power reception coil in the first direction. That is, the solenoid power reception coil is located between the pair of first sidewalls in the first direction. Each of the pair of first sidewalls extends in the second direction and the third direction. The pair of second sidewalls is located at both sides of the solenoid power reception coil in the second direction. That is, the solenoid power reception coil is located between the pair of second sidewalls in the second direction. Each of the pair of second sidewalls extends in the first direction and the third direction. One end of each of the pair of first sidewalls in the second direction is located further outward in the second direction than one end of the solenoid power reception coil in the second direction. The other end of each of the pair of first sidewalls in the second direction is located further outward in the second direction than the other end of the solenoid power reception coil in the second direction. One end of each of the pair of second sidewalls in the first direction is located further outward in the first direction than one end of the solenoid power reception coil in the first direction. The other end of each of the pair of second sidewalls in the first direction is located further outward in the first direction than the other end of the solenoid power reception coil in the first direction. One end of the main body in the first direction is located further outward in the first direction than one end of the solenoid power reception coil in the first direction. The other end of the main body in the first direction is located further outward in the first direction than the other end of the solenoid power reception coil in the first direction. One end of the main body in the second direction is located further outward in the second direction than one end of the solenoid power reception coil in the second direction. The other end of the main body in the second direction is located further outward in the second direction than the other end of the solenoid power reception coil in the second direction. A shortest distance from a first sidewall of the pair of first sidewalls which is located at one end side in the first direction to the one end of the solenoid power reception coil in the first direction and a shortest distance from a first sidewall of the pair of first sidewalls which is located at the other end side in the first direction to the other end of the solenoid power reception coil in the first direction are shorter than a shortest distance from a second sidewall of the pair of second sidewalls which is located at one end side in the second direction to the one end of the solenoid power reception coil in the second direction and a shortest distance from a second sidewall of the pair of second sidewalls which is located at the other end side in the second direction to the other end of the solenoid power reception coil in the second direction. The shortest distance from the first sidewall of the pair of first sidewalls which is located at the one end side in the first direction to the one end of the solenoid power reception coil in the first direction and the shortest distance from the first sidewall of the pair of first sidewalls which is located at the other end side in the first direction to the other end of the solenoid power reception coil in the first direction are longer than the shortest distance from the main body to the solenoid power reception coil. The shortest distance from the second sidewall of the pair of second sidewalls which is located at the one end side in the second direction to the one end of the solenoid power reception coil in the second direction and the shortest distance from the second sidewall of the pair of second sidewalls which is located at the other end side in the second direction to the other end of the solenoid power reception coil in the second direction are longer than the shortest distance from the main body to the solenoid power reception coil.

By the above-described power reception device, it is enabled to further increase power transmission efficiency while making use of advantages of the solenoid coil.

The electromagnetic shield may further include an extension piece. The extension piece is provided in at least one of the pair of first sidewalls. The extension piece extends away from the solenoid power reception coil in a direction that is the first direction. In this case, it is possible to further increase power transmission efficiency.

When the electromagnetic shield includes an extension piece, the power reception device may further include a substrate. The substrate overlaps the extension piece when viewed in the third direction. A circuit that is connected to the solenoid power reception coil is formed on the substrate. In this case, the circuit that is formed on the substrate is hardly influenced by an electromagnetic wave that is generated by electrical conduction to the solenoid power reception coil.

At least one of the pair of first sidewalls may be separated from the pair of second sidewalls. In this case, it is possible to efficiently perform wiring that provides a connection to the solenoid power reception coil.

When viewed from the third direction, a length of each of the pair of first sidewalls in the second direction may be longer than a length of each of the pair of second sidewalls in the first direction. In this case, it is possible to reduce a size of the power reception device to a compact size.

A length of the solenoid power reception coil in the second direction is longer than a length of the solenoid power reception coil in the first direction. In this case, it is possible to reduce the size of the power reception device to a compact size.

A length of the solenoid power reception coil in the third direction is shorter than a length of the solenoid power reception coil in the first direction. In this case, it is possible to reduce the size of the power reception device to a compact size.

The power reception device may further include a core inserted in the solenoid power reception coil. In this case, it is possible to further increase power transmission efficiency while making use of advantages of the solenoid power reception coil.

When viewed in the third direction, one end of the core in the second direction may be located further outward in the second direction than the one end of the solenoid power reception coil in the second direction. When viewed in the third direction, the other end of the core in the second direction may be located further outward in the second direction than the other end of the solenoid power reception coil in the second direction.

A shortest distance from the second sidewall of the pair of second sidewalls which is located at the one end side in the second direction to the one end of the core in the second direction and a shortest distance from the second sidewall of the pair of second sidewalls which is located at the other end side in the second direction to the other end of the core in the second direction are longer than a shortest distance from the first sidewall of the pair of first sidewalls which is located at the one end side in the first direction to the one end of the solenoid power reception coil in the first direction and a shortest distance from the first sidewall of the pair of first sidewalls which is located at the other end side in the first direction to the other end of the solenoid power reception coil in the first direction. In this case, it is possible to further increase power transmission efficiency while making use of advantages of the solenoid power reception coil.

A vehicle according to an embodiment of the present teaching includes the above-described power reception device, a right front wheel, a left front wheel, a right rear wheel, and a left rear wheel. The solenoid power reception coil is a solenoid power reception coil for a vehicle, which is connected to a power storage device included in the vehicle. The power storage device supplies power to a drive motor that drives the vehicle. The pair of first sidewalls included in the electromagnetic shield is arranged side by side along one of a front direction, a right direction, an upper direction of the vehicle.

In the vehicle, because the vehicle includes the power reception device that is able to further increase power transmission efficiency while making use of advantages of the solenoid power reception coil, it is possible to efficiently perform charging of the power storage device included in the vehicle.

A vehicle according to an embodiment of the present teaching includes the above-described power reception device, a right front wheel, a left front wheel, a right rear wheel, and a left rear wheel. The solenoid power reception coil is a solenoid power reception coil for a vehicle, which is connected to a power storage device that is included in the vehicle. The power storage device supplies power to a drive motor that drives the vehicle. One of the pair of first sidewalls and the pair of second sidewalls included in the electromagnetic shield, which is longest when viewed from the third direction, is arranged along one of a front direction, a right direction, and an upper direction of the vehicle.

In the vehicle, because the vehicle includes the power reception device that is able to further increase power transmission efficiency while making use of advantages of the solenoid power reception coil, it is possible to efficiently perform charging of the power storage device included in the vehicle.

A vehicle according to an embodiment of the present teaching includes the above-described power reception device, a vehicle body, a right front wheel, a left front wheel, a right rear wheel, and a left rear wheel. The solenoid power reception coil is a solenoid power reception coil for a vehicle, which is connected to a power storage device that is included in the vehicle. The power storage device supplies power to a drive motor that drives the vehicle. The electromagnetic shield is relatively-unmovably supported with respect to the vehicle body.

In the vehicle, because the vehicle includes the power reception device that is able to further increase power transmission efficiency while making use of advantages of the solenoid power reception coil, it is possible to efficiently perform charging of the power storage device included in the vehicle.

A form in which the electromagnetic shield is relatively-unmovably supported with respect to the vehicle body is not particularly limited. Forms in which the electromagnetic shield is relatively-unmovably supported with respect to the vehicle body include not only a form in which the electromagnetic shield is directly supported with respect to the vehicle body to be relatively unmovable but also a form in which the electromagnetic shield is indirectly supported with respect to the vehicle body to be relatively unmovable.

A straddled vehicle according to an embodiment of the present teaching includes the above-described power reception device, a front wheel, a rear wheel, a saddle, and a vehicle body frame. The straddled vehicle is a straddled vehicle on which a rider rides in a state in which the rider straddles the saddle. The solenoid power reception coil is a solenoid power reception coil for a straddled vehicle, which is connected to a power storage device that is included in the straddled vehicle. The power storage device supplies power to a drive motor that drives the straddled vehicle. The electromagnetic shield is arranged on a front side or on a rear side of the straddled vehicle relative to the saddle supported by the vehicle body frame.

In the straddled vehicle, because the straddled vehicle includes the power reception device that is able to further increase power transmission efficiency while making use of advantages of the solenoid power reception coil, it is possible to efficiently perform charging of the power storage device included in the straddled vehicle.

A straddled vehicle according to an embodiment of the present teaching includes the above-described power reception device, a front wheel, a rear wheel, a saddle, and a vehicle body frame. The straddled vehicle is a straddled vehicle on which an occupant rides in a state in which the occupant straddles the saddle. The solenoid power reception coil is a solenoid power reception coil for a straddled vehicle, which is connected to a power storage device that is included in the straddled vehicle. The power storage device supplies power to a drive motor that drives the straddled vehicle. The electromagnetic shield is relatively-unmovably supported with respect to the vehicle body frame.

In the straddled vehicle, because the straddled vehicle includes the power reception device that is able to further increase power transmission efficiency while making use of advantages of the solenoid power reception coil, it is possible to efficiently perform charging of the power storage device included in the straddled vehicle.

A form in which the electromagnetic shield is relatively-unmovably supported with respect to the vehicle body frame is not particularly limited. Forms in which the electromagnetic shield is relatively-unmovably supported with respect to the vehicle body frame include not only a form in which the electromagnetic shield is directly supported with respect to the vehicle body frame to be relatively unmovable but also a form in which the electromagnetic shield is indirectly supported with respect to the vehicle body frame to be relatively unmovable.

### BRIEF DESCRIPTION OF DRAWINGS

[FIG. 1] FIG. 1 is a left-side view illustrating an electric power-assisted bicycle as a straddled vehicle according to an embodiment of the present teaching.
[FIG. 2] FIG. 2 is a left-side view illustrating an enlarged front part of the electric power-assisted bicycle illustrated in FIG. 1.
[FIG. 3] FIG. 3 is a cross-sectional view illustrating a power reception device included in the electric power-assisted bicycle illustrated in FIG. 1.
[FIG. 4] FIG. 4 is a bottom view illustrating a power reception coil, a shield, and a substrate.
[FIG. 5] FIG. 5 is a view illustrating a relationship between a power reception coil and a shield.
[FIG. 6] FIG. 6 is a left-side view illustrating a state in which the electric power-assisted bicycle illustrated in FIG. 1 is being charged.
[FIG. 7] FIG. 7 is a left-side view illustrating an enlarged front part of the electric power-assisted bicycle illustrated in FIG. 6.
[FIG. 8] FIG. 8 is a cross-sectional view of a power transmission device.
[FIG. 9] FIG. 9 is a plan view illustrating a power transmission coil, a shield, and a substrate.
[FIG. 10] FIG. 10 is a longitudinal-sectional view illustrating a relationship between a power reception device and a power transmission device in a state in which the electric power-assisted bicycle illustrated in FIG. 1 is being charged.
[FIG. 11] FIG. 11 is a perspective view illustrating a shield that was used in a simulation.
[FIG. 12] FIG. 12 is a perspective view illustrating a shield that was used in a simulation, the shield having a different shape from that of the shield of FIG. 11.
[FIG. 13] FIG. 13 is a perspective view illustrating a shield that was used in a simulation, the shield having a different shape from those of the shields of FIG. 11 and FIG. 12.
[FIG. 14] FIG. 14 is a left-side view illustrating a vehicle according to an embodiment of the present teaching.

### DESCRIPTION OF EMBODIMENTS

In order to increase power transmission efficiency from a power transmission coil to a power reception coil, for example, a coupling coefficient may be increased. In order to increase the coupling coefficient, for example, a shape of a coil may be changed. Specifically, the number of turns of a winding wire of a coil may be increased or the like. However, in such a manner, a size of the shape of the coil itself is increased. As a result, a weight of the coil is increased.

In order to increase the coupling coefficient, a distance from the power transmission coil to the power reception coil in a state in which power transmission from the power transmission coil to the power reception coil is performed may be reduced. However, in this case, it is not possible to utilize an advantage of using a solenoid coil, that is, an advantage that, even when the distance from the power transmission coil to the power reception coil is relatively large, it is possible to ensure power transmission efficiency.

Therefore, the present inventor intensively studied a structure that increases the coupling coefficient without changing the shape of a coil itself and the distance from the power transmission coil to the power reception coil. Then, the present inventor focused on a shape of a shield.

The shield is used for preventing leakage of a magnetic flux that is generated by electrical conduction to a coil. Therefore, it is considered that, even when the shape of the shield is changed, the change of the shield does not contribute to increase in coupling coefficient. However, the present inventor daringly put a focus on the shape of the shield and examined a correlation between the shape of the shield and the coupling coefficient. As a result, the present inventor found that, when a solenoid coil is used, the coupling coefficient is increased by forming the shield into a specific shape. The present teaching has been completed based on the above-described findings.

With reference to the accompanying drawings, a straddled vehicle including a power reception device according to an embodiment of the present teaching will be described below. In this embodiment, as a straddled vehicle, an electric power-assisted bicycle will be described as an example. In the drawings, the same or corresponding parts are denoted by the same reference symbol and the description of the parts is not repeated.

### [Electric Power-assisted Bicycle]

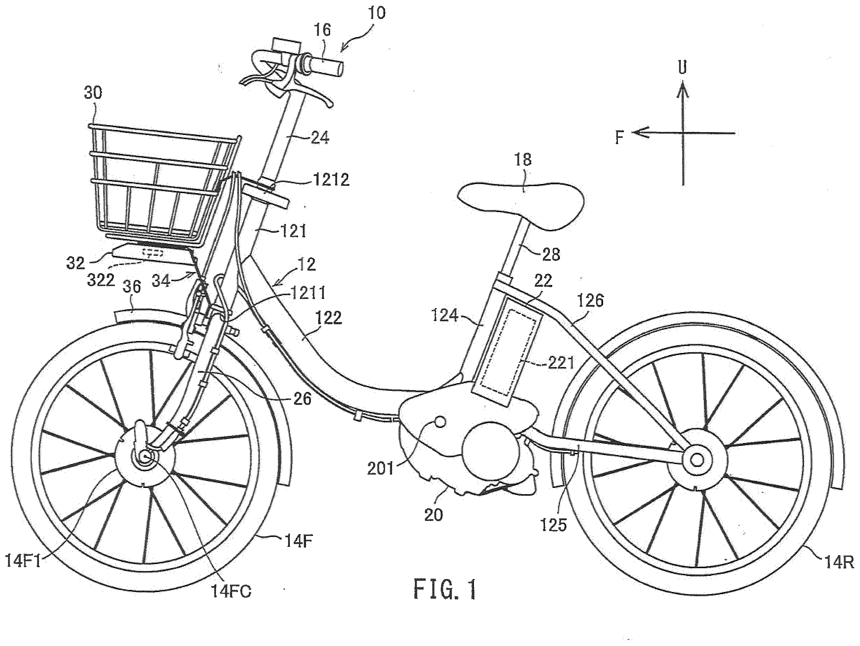

With reference to FIG. 1, an electric power-assisted bicycle 10 including a power reception device 32 according to an embodiment of the present teaching will be described. FIG. 1 is a left-side view illustrating a schematic structure of the electric power-assisted bicycle 10.

In the following description, each of a front-rear direction (forward and backward), a left-right direction, and an up-down direction (above and below) means a direction viewed from a rider who sits on a saddle 18 of the electric power-assisted bicycle 10. In the drawings that are referred to in the following description, an arrow F indicates forward with respect to a vehicle, an arrow U indicates upward with respect to the vehicle, an arrow L indicates leftward with respect to the vehicle, and an arrow R indicates rightward with respect to the vehicle.

The electric power-assisted bicycle 10 includes a vehicle body frame 12, a front wheel 14F, a rear wheel 14R, a handle 16, the saddle 18, a drive unit 20, and a battery unit 22.

The vehicle body frame 12 includes a head pipe 121, a main frame 122, a seat frame 124, a pair of chain frames 125, 125, and a pair of seat frames 126, 126.

The head pipe 121 is arranged in a front part of the vehicle body frame 12 and extends in the up-down direction. A steering shaft 24 is inserted in the head pipe 121 so as to freely rotate. The handle 16 is fixed to an upper end of the steering shaft 24. A front fork 26 is fixed to a lower end of the steering shaft 24. A front fender 36 is fixed to the front fork 26. The front wheel 14F is rotatably attached to a lower end of the front fork 26. That is, the front wheel 14F is supported by the vehicle body frame 12 via the steering shaft 24 and the front fork 26. The handle 16, the steering shaft 24, and the front fork 26 realize a steering member that changes a travel direction of the front wheel 14F.

The main frame 122 is arranged behind the head pipe 121 and extends in the front-rear direction. A front end of the main frame 122 is connected to the head pipe 121. A rear end of the main frame 122 is connected to a bracket (not illustrated) which supports the drive unit 20.

The seat frame 124 is arranged behind the main frame 122. The seat frame 124 is connected to the bracket (not illustrated) which supports the drive unit 20 and extends in the up-down direction. The battery unit 22 is attached to the seat frame 124. The battery unit 22 supplies power to the drive unit 20. The battery unit 22 includes a battery 221 as a power storage device and a control unit (not illustrated). The battery 221 is a rechargeable battery that is capable of charging and discharging. The control unit controls charging and discharging of the battery 221 and monitors an output current, a remaining amount, or the like of the battery 221.

A seat pipe 28 is inserted in the seat frame 124. The saddle 18 is attached to an upper end of the seat pipe 28. That is, the saddle 18 is supported by the vehicle body frame 12 via the seat pipe 28.

Each of the pair of chain frames 125, 125 extends in the front-rear direction. The pair of chain frames 125, 125 is arranged side by side along the left-right direction. The rear wheel 14R is arranged between the pair of chain frames 125, 125. The pair of chain frames 125, 125 is arranged left-right symmetrical. Therefore, in FIG. 1, only the left-side chain frame 125 is illustrated.

A front-end part of each of the chain frames 125 is attached to the bracket (not illustrated) which supports the drive unit 20. That is, each of the chain frames 125 extends backwardly from the seat frame 124.

An axle of the rear wheel 14R is rotatably attached to a rear end part of each of the chain frames 125. That is, the axle of the rear wheel 14R is rotatably supported by the pair of chain frames 125, 125. In short, the rear wheel 14R is supported by the vehicle body frame 12. A driven sprocket is fixed to the axle of the rear wheel 14R.

Each of the pair of seat frames 126, 126 extends in the front-rear direction. The pair of seat frames 126, 126 is arranged side by side along the left-right direction. The rear wheel 14R is arranged between the pair of seat frames 126, 126. The pair of seat frames 126, 126 is arranged left-right symmetrical. Therefore, in FIG. 1, only the left-side seat frame 126 is illustrated.

A front-end part of the left-side seat frame 126 is connected to the seat frame 124. A front-end part of the right-side seat frame 126 is connected to the seat frame 124.

A rear end part of the left-side seat frame 126 is connected to a rear end part of the left-side chain frame 125. A rear end part of the right-side seat frame 126 is connected to a rear end part of the right-side chain frame 125.

The drive unit 20 includes a motor. The motor generates a driving force that assists a pedal stepping force of a rider.

The drive unit 20 includes a crankshaft 201. A crankarm is attached to each of both of end parts of the crankshaft 201 in an axial direction thereof. A pedal is attached to the crankarm.

A driving sprocket is attached to the crankshaft 201. A chain is wound around the driving sprocket and the driven sprocket.

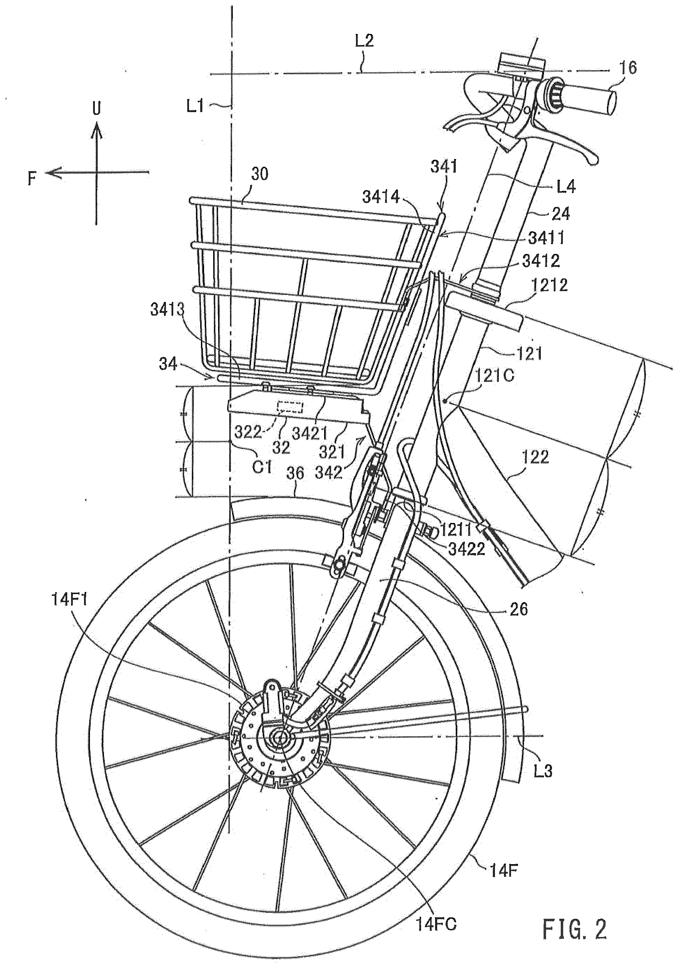

The electric power-assisted bicycle 10 further includes a front basket 30 and a power reception device 32. These members will be described below with reference to FIG. 2. FIG. 2 is a left-side view illustrating an enlarged front part of the electric power-assisted bicycle 10.

The front basket 30 opens upwardly. The front basket 30 is configured such that goods can be put out and in from an upper side. A length of the front basket 30 in the left-right direction is shorter than a length of the handle 16 in the left-right direction.

The front basket 30 is attached to the steering shaft 24 and the front fork 26 via a bracket 34. Specifically, the bracket 34 is configured in a manner described below.

The bracket 34 includes an upper bracket 341 and a lower bracket 342. The upper bracket 341 includes a front bracket 3411 and a rear bracket 3412.

The front bracket 3411 extends in the front-rear direction and the up-down direction. The front bracket 3411 includes a front part 3413 and a rear part 3414.

The front part 3413 is located under the front basket 30. The front part 3413 is attached to a bottom part of the front basket 30.

The rear part 3414 is located behind the front basket 30. The rear part 3414 extends backwardly and also upwardly from a rear end of the front part 3413. The rear part 3414 is fixed to the steering shaft 24 via the rear bracket 3412.

The lower bracket 342 extends in the front-rear direction and the up-down direction. The lower bracket 342 includes a front part 3421 and a rear part 3422.

The front part 3421 is located under the front part 3413 included in the upper bracket 341. The front part 3421 is fixed to the front part 3413. As a method for fixing the front part 3421 to the front part 3413, for example, welding, screwing, or the like is used.

The rear part 3422 is located backward and below the front part 3421. The rear part 3422 is fixed to the front fork 26.

As described above, the upper bracket 341 (specifically, the rear bracket 3412) is fixed to the steering shaft 24 and the lower bracket 342 is fixed to the front fork 26. The steering shaft 24 and the front fender 36 move in accordance with an operation of the handle 16. That is, the bracket 34 moves with the handle 16. In short, the front basket 30 moves with the handle 16.

The power reception device 32 is arranged under the front basket 30. In an example illustrated in FIG. 2, the power reception device 32 is located between the front basket 30 and the front fender 36. When viewed from the up-down direction, the power reception device 32 is arranged in a position that overlaps each of the front basket 30 and the front fender 36.

The power reception device 32 is screwed on the front part 3413 of the upper bracket 341 and the front part 3421 of the lower bracket 342. That is, the power reception device 32 moves with the handle 16.

### [Power Reception Device]

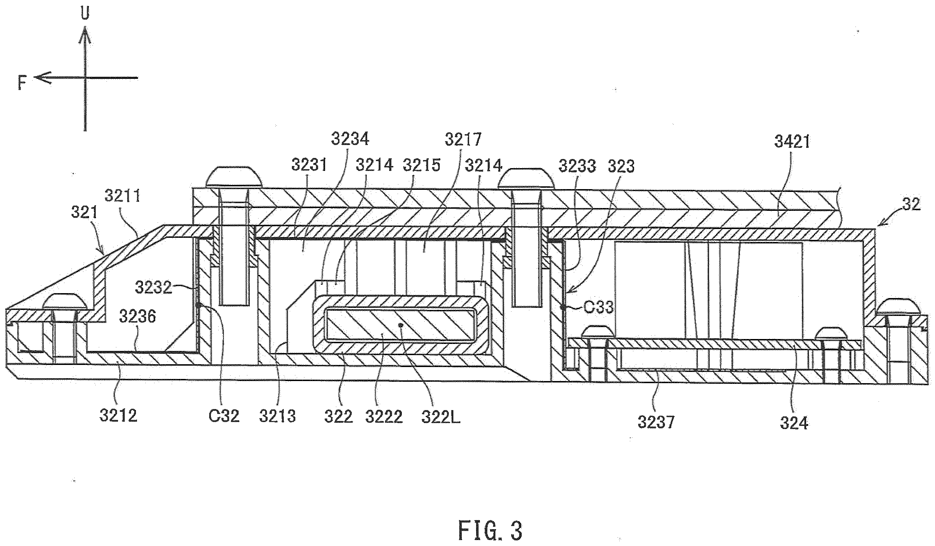

With reference to FIG. 3, the power reception device 32 will be described. FIG. 3 is a left-side longitudinal-sectional view of the power reception device 32.

The power reception device 32 includes a housing 321, a power reception coil 322 as a solenoid power reception coil, a shield 323 as an electromagnetic shield, and a substrate 324. These members will be described below.

The housing 321 includes an upper housing 3211 and a lower housing 3212. The upper housing 3211 is arranged above the lower housing 3212. The upper housing 3211 is fixed to the lower housing 3212. Thus, the housing 321 is formed. The power reception coil 322, the shield 323, and the substrate 324 are arranged in the housing 321.

In the power reception coil 322, an electric current flows due to a change in magnetic flux that is generated by electrical conduction to the power transmission coil 422 provided in the power transmission device 42.

The power reception coil 322 is wound around a core 3222. The core 3222 has a rectangular parallelepiped shape, that is, a thick rectangular plate shape. The core 3222 is formed of a magnetic material. The magnetic material is, for example, iron.

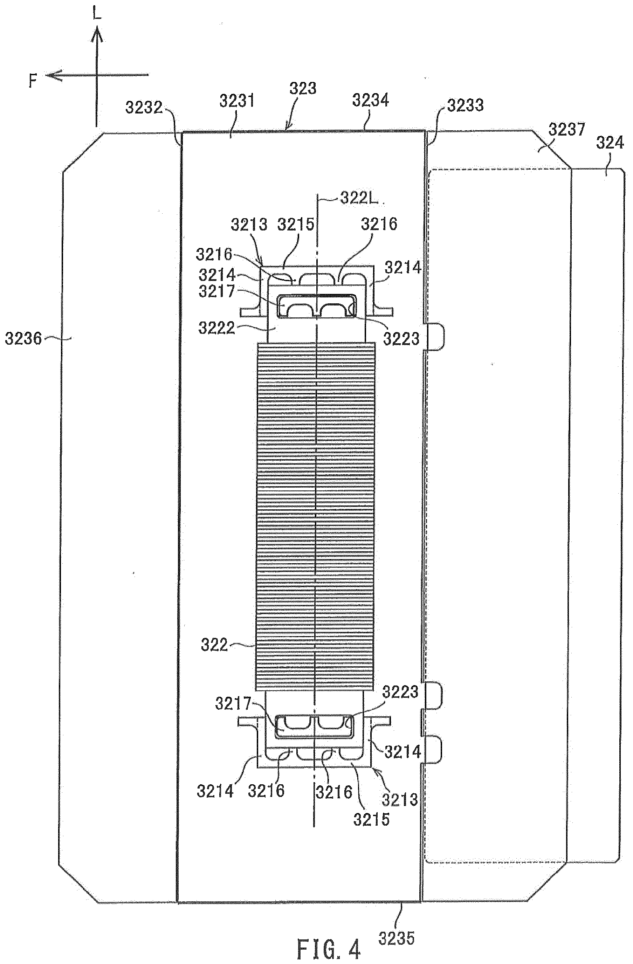

With reference to FIG. 4, the power reception coil 322 will be described. FIG. 4 is a bottom view illustrating the power reception coil 322, the shield 323, and the substrate 324. That is, FIG. 4 is a view illustrating the power reception coil 322, the shield 323, and the substrate 324 when viewed from a bottom in a state in which the lower housing 3212 illustrated in FIG. 3 has been removed. Therefore, in FIG. 4, a part of the substrate 324 located above the shield 323 is concealed by the shield 323. Note that, in FIG. 4, in order to illustrate a support state of the core 3222, support units 3213 and projections 3217 that are provided in the lower housing 3212 are illustrated.

First, the core 3222 around which the power reception coil 322 is wound will be described. The core 3222 straightly extends in the left-right direction with a substantially constant rectangular cross-section (see FIG. 3). A hole 3223 is formed in each of both end parts of the core 3222 in the left-right direction. The hole 3223 straightly extends in the up-down direction with a substantially constant opening shape (a substantially rectangular shape in this embodiment).

Each of the both end parts of the core 3222 in the left-right direction is supported by the support unit 3213. The support unit 3213 is formed in the lower housing 3212 (see FIG. 3). The support unit 3213 projects upwardly from an inner surface (a bottom surface) of the lower housing 3212. The support unit 3213 includes a pair of side walls 3214, 3214 and a connecting wall 3215.

Each of the pair of side walls 3214, 3214 projects upwardly from the bottom surface of the lower housing 3212 (see FIG. 3). The pair of side walls 3214, 3214 face one another in the front-rear direction.

The connecting wall 3215 projects upwardly from the bottom surface of the lower housing 3212. The connecting wall 3215 extends in the front-rear direction and connects the pair of side walls 3214, 3214 to one another.

The connecting wall 3215 includes a plurality (two in this embodiment) of projections 3216. Each of the plurality of projections 3216 projects from a side surface (an inner side surface in the left-right direction) of the connecting wall 3215 in the left-right direction. The plurality of projections 3216 projects in the same direction. When viewed from the up-down direction, each of the plurality of projections 3216 is located between the pair of side walls 3214, 3214.

Each of the both end parts of the core 3222 in the left-right direction is sandwiched between the pair of side walls 3214, 3214 in the front-rear direction. In this state, each of the plurality of projections 3216 is in contact with an end surface of the core 3222 in the left-right direction.

Also, in a state in which each of the both end parts of the core 3222 in the left-right direction is supported by the support unit 3213, the projection 3217 is inserted in each of the two holes 3223 formed in the core 3222. The projection 3217 projects upwardly from the bottom surface of the lower housing 3212.

The power reception coil 322 includes an axial line 322L. The axial line 322L extends in the left-right direction. The axial line 322L passes through a center of the core 3222. The axial line 322L extends in parallel to each of an upper surface, a lower surface, a front-side surface, and a rear-side surface of the core 3222. The axial line 322L perpendicularly intersects with each of a left-side surface and a right-side surface of the core 3222. The power reception coil 322 is wound around the core 3222 about the axial line 322L. That is, the power reception coil 322 is cylindrically wound about the axial line 322L. In short, the power reception coil 322 is a solenoid coil.

A left end of the power reception coil 322 is located on a right side (an inner side in the left-right direction) relative to a left end of the core 3222. A right end of the power reception coil 322 is located on a left side (an inner side in the left-right direction) relative to a right end of the core 3222.

A length of the power reception coil 322 in the left-right direction (an axial direction) is longer than a length of the power reception coil 322 in the front-rear direction (a width direction). The length of the power reception coil 322 in the left-right direction (the axial direction) is, for example, twice a length of the power transmission coil 322 in the front-rear direction (the width direction) or more. In the example illustrated in FIG. 4, the length of the power reception coil 322 in the left-right direction (the axial direction) is substantially three times the length of the power reception coil 322 in the front-rear direction (the width direction).

With reference to FIG. 3, the power reception coil 322 will be described. The length of the power reception coil 322 in the front-rear direction (the width direction) is longer than a length of the power reception coil 322 in the up-down direction (a height direction). The length of the power reception coil 322 in the front-rear direction (the width direction) is twice the length of the power reception coil 322 in the up-down direction (the height direction) or more. In the example illustrated in FIG. 3, the length of the power reception coil 322 in the front-rear direction (the width direction) is substantially three times the length of the power reception coil 322 in the up-down direction (the height direction).

With reference to FIG. 2, the power reception coil 322 will be described. The power reception coil 322 is located forward relative to the head pipe 121. The power reception coil 322 is located above a lower end 1211 of the head pipe 121. The power reception coil 322 is located below an upper end 1212 of the head pipe 121. That is, the power reception coil 322 is located below the handle 16. Note that, in the example illustrated in FIG. 2, the power reception coil 322 is located below an intermediate point 121C in a length direction (the axial direction) of the head pipe 121.

The power reception coil 322 is located under the front basket 30. The power reception coil 322 is located above the front fender 36. That is, the power reception coil 322 is located between the front basket 30 and the front fender 36.

In the example illustrated in FIG. 2, the power reception coil 322 is located above an intermediate point C1. In this case, the intermediate point C1 is an intermediate point of a distance from a lower end of the front basket 30 to an upper end of the front fender 36. That is, the power reception coil 322 is located closer to the front basket 30 than the intermediate point C1 is in the up-down direction.

The power reception coil 322 is located backward relative to a front end of the front basket 30. The power reception coil 322 is located backward relative to a front end of the front fender 36. The power reception coil 322 is located backward relative to a front end of a hub 14F1 included in the front wheel 14F.

The power reception coil 322 is located substantially immediately above an axial center 14FC of the hub 14F1. That is, the power reception coil 322 is located in substantially the same position as that of the axial center 14FC in the front-rear direction.

As illustrated in FIG. 2, four straight lines L1, L2, L3, and L4 are set. The straight line L1 is in contact with a front end of the hub 14F1 and extends in the up-down direction, when viewed from a side surface of the vehicle. The straight line L2 extends in a direction that perpendicularly intersects with the straight line L1 and is in contact with an upper end of the handle 16, when viewed from the side surface of the vehicle. The straight line L3 extends in a direction that perpendicularly intersects with the straight line L1 and passes through the axial center 14FC of the hub 14F1, when viewed from the side surface of the vehicle. The straight line L4 extends in parallel to the head pipe 121 and passes through the axial center 14FC, when viewed from the side surface of the vehicle. The power reception coil 322 is arranged in an area surrounded by the four straight lines L1, L2, L3, and L4.

With reference to FIG. 1, the power reception coil 322 will be described. The power reception coil 322 is located forward relative to the drive unit 20. That is, the power reception coil 322 is located forward relative to the crankshaft 201.

In this case, the drive unit 20 is located forward relative to the rear wheel 14R. That is, the power reception coil 322 is located in an opposite side to the rear wheel 14R with respect to the drive unit 20 in the front-rear direction.

The power reception coil 322 is located above the drive unit 20. That is, the power reception coil 322 is located above the crankshaft 201.

In this case, the drive unit 20 is located below the lower end 1211 of the head pipe 121. As described above, the power reception coil 322 is located above the lower end 1211 of the head pipe 121. That is, the power reception coil 322 is located on an opposite side to the drive unit 20 with respect to the lower end 1211 of the head pipe 121 in the up-down direction.

The power reception coil 322 is located forward relative to the head pipe 121. In this case, the drive unit 20 is located backward relative to the head pipe 121. That is, the power reception coil 322 is located on an opposite side to the drive unit 20 with respect to the head pipe 121 in the front-rear direction.

The power reception coil 322 is located forward relative to the saddle 18. That power reception coil 322 is located below the saddle 18.

The power reception coil 322 is located forward relative to the battery unit 22. The power reception coil 322 is located forward relative to the seat frame 124. In this case, the battery unit 22 is located backward relative to the seat frame 124. That is, the power reception coil 322 is located on an opposite side to the battery unit 22 with respect to the seat frame 124 in the front-rear direction.

### [Shield]

With reference to FIG. 3, the shield 323 will be described. The shield 323 is arranged close to the power reception coil 322. The shield 323 is formed of a conductor. The conductor is, for example, copper, aluminum, or the like.

The shield 323 includes a top plate 3231, a front plate 3232, and a rear plate 3233. These plates will be described below.

The top plate 3231 is arranged above the power reception coil 322. A gap is formed between the top plate 3231 and the power reception coil 322. The length of the gap is substantially the same as the length of the power reception coil 322 in the up-down direction (the height direction). The top plate 3231 has a rectangular shape. When viewed from the up-down direction, the top plate 3231 covers the entire power reception coil 322.

The front plate 3232 is arranged forward relative to the power reception coil 322. A gap is formed between the front plate 3232 and the power reception coil 322.

The front plate 3232 has a rectangular shape. An upper end of the front plate 3232 is connected to a front end of the top plate 3231. A length of the front plate 3232 in the left-right direction is substantially the same as a length of the top plate 3231 in the left-right direction (see FIG. 4). When viewed from the front-rear direction, the front plate 3232 covers a left end and a right end (both ends in a direction in which the axial line 322L extends) of the power reception coil 322.

An intermediate point C32 of the front plate 3232 in the height direction is located closer to the top plate 3231 than the axial line 322L of the power reception coil 322 is in a direction (the up-down direction of FIG. 3) in which a straight line that is perpendicular to a surface of the top plate 3231 extends. That is, the axial line 322L is located more distant from the top plate 3231 than the intermediate point C32 is in the direction in which a straight line that is perpendicular to a surface of the top plate 3231 extends. Expressed in another way, the axial line 322L is located on an opposite side to the top plate 3231 with respect to the intermediate point C32 in the direction in which a straight line that is perpendicular to a surface of the top plate 3231 extends.

The rear plate 3233 is arranged backward relative to the power reception coil 322. A gap is formed between the rear plate 3233 and the power reception coil 322. The gap is smaller than the gap formed between the front plate 3232 and the power reception coil 322. In an example illustrated in FIG. 3, the gap is smaller than the gap formed between the front plate 3232 and the power reception coil 322. That is, the axial line 322L of the power reception coil 322 is located closer to the rear plate 3233 than an intermediate point of a distance from the front plate 3232 to the rear plate 3233 is.

The rear plate 3233 has a rectangular shape. An upper end of the rear plate 3233 is not connected to a rear end of the top plate 3231. That is, the rear plate 3233 is a separate member from the top plate 3231. A length of the rear plate 3233 in the left-right direction is substantially the same as the length of the top plate 3231 in the left-right direction. The rear plate 3233 faces the front plate 3232 in the front-rear direction. In the example illustrated in FIG. 3, a height (a length in the up-down direction) of the rear plate 3233 is higher than a height of the front plate 3232. When viewed from the front-rear direction, the rear plate 3233 covers the left end and the right end (the both ends in a direction in which the axial line 322L extends) of the power reception coil 322.

An intermediate point C33 of the rear plate 3233 in the height direction is located closer to the top plate 3231 than the axial line 322L of the power reception coil 322 is in the direction (the up-down direction of FIG. 3) in which a straight line that is perpendicular to a surface of the top plate 3231 extends. That is, the axial line 322L is located more distant from the top plate 3231 than the intermediate point C33 is in the direction in which a straight line that is perpendicular to a surface of the top plate 3231 extends. Expressed in another way, the axial line 322L is located on an opposite side to the top plate 3231 with respect to the intermediate point C33 in the direction in which a straight line that is perpendicular to a surface of the top plate 3231 extends.

The shield 323 further includes a left plate 3234 and a right plate 3235. These plates will be described below with reference to FIG. 4.

The left plate 3234 is arranged on the left side relative to the power reception coil 322. A gap is formed between the left plate 3234 and the power reception coil 322.

The gap formed between the left plate 3234 and the power reception coil 322 is larger than the gap formed between the front plate 3232 and the power reception coil 322. A size of the gap formed between the left plate 3234 and the power reception coil 322 is twice a size of the gap formed between the front plate 3232 and the power reception coil 322 or more. In an example illustrated in FIG. 4, the size of the gap formed between the left plate 3234 and the power reception coil 322 is substantially three times the size of the gap formed between the front plate 3232 and the power reception coil 322.

The gap formed between the left plate 3234 and the power reception coil 322 is larger than the gap formed between the rear plate 3233 and the power reception coil 322. The size of the gap formed between the left plate 3234 and the power reception coil 322 is twice the size of the gap formed between the rear plate 3233 and the power reception coil 322 or more. In the example illustrated in FIG. 4, the size of the gap formed between the left plate 3234 and the power reception coil 322 is substantially 4.5 times the size of the gap formed between the rear plate 3233 and the power reception coil 322.

The left plate 3234 is arranged on the left side relative to the core 3222 around which the power reception coil 322 is wound. A gap is formed between the left plate 3234 and the core 3222.

The gap formed between the left plate 3234 and the core 3222 is larger than the gap formed between the front plate 3232 and the power reception coil 322. A size of the gap formed between the left plate 3234 and the core 3222 is 1.5 times the size of the gap formed between the front plate 3232 and the power reception coil 322 or more. The size of the gap formed between the left plate 3234 and the core 3222 is substantially twice the size of the gap formed between the front plate 3232 and the power reception coil 322.

The gap formed between the left plate 3234 and the core 3222 is larger than the gap formed between the rear plate 3233 and the power reception coil 322. The size of the gap formed between the left plate 3234 and the core 3222 is twice the size of the gap formed between the rear plate 3233 and the power reception coil 322 or more. The size of the gap formed between the left plate 3234 and the core 3222 is substantially three times the size of the gap formed between the rear plate 3233 and the power reception coil 322.

The left plate 3234 has a rectangular shape. An upper end of the left plate 3234 is connected to a left end of the top plate 3231. A front end of the left plate 3234 is connected to a left end of the front plate 3232. A rear end of the left plate 3234 is not connected to a left end of the rear plate 3233. That is, the left plate 3234 is a separate member from the rear plate 3233. The left plate 3234 covers the power reception coil 322 when viewed from the left-right direction.

A length of the left plate 3234 in the front-rear direction is substantially the same as a length of the top plate 3231 in the front-rear direction. A height (a length in the up-down direction) of the left plate 3234 is substantially the same as the height of the front plate 3232.

A length of the left plate 3234 in the front-rear direction is shorter than the length of the top plate 3231 in the left-right direction. The length of the left plate 3234 in the front-rear direction is 1/2 of the length of the top plate 3231 in the left-right direction or less. In this embodiment, the length of the left plate 3234 in the front-rear direction is 1/3 of the length of the top plate 3231 in the left-right direction or less.

The right plate 3235 is arranged on a right side relative to the power reception coil 322. A gap is formed between the right plate 3235 and the power reception coil 322.

The gap formed between the right plate 3235 and the power reception coil 322 is larger than the gap formed between the front plate 3232 and the power reception coil 322. The gap formed between the right plate 3235 and the power reception coil 322 is larger than the gap formed between the rear plate 3233 and the power reception coil 322. A size of the gap formed between the right plate 3235 and the power reception coil 322 is substantially the same as the size of the gap formed between the left plate 3234 and the power reception coil 322.

The right plate 3235 is arranged on the right side relative to the core 3222 around which the power reception coil 322 is wound. A gap is formed between the right plate 3235 and the core 3222.

The gap formed between the right plate 3235 and the core 3222 is larger than the gap formed between the front plate 3232 and the power reception coil 322. A size of the gap formed between the right plate 3235 and the core 3222 is 1.5 times the size of the gap formed between the front plate 3232 and the power reception coil 322 or more. The size of the gap formed between the right plate 3235 and the core 3222 is substantially twice the size of the gap formed between the front plate 3232 and the power reception coil 322.

The gap formed between the right plate 3235 and the core 3222 is larger than the gap formed between the rear plate 3233 and the power reception coil 322. The size of the gap formed between the right plate 3235 and the core 3222 is twice the size of the gap formed between the rear plate 3233 and the power reception coil 322 or more. The size of the gap formed between the right plate 3235 and the core 3222 is substantially three times the size of the gap formed between the rear plate 3233 and the power reception coil 322.

The right plate 3235 has a rectangular shape. An upper end of the right plate 3235 is connected to a right end of the top plate 3231. A front end of the right plate 3235 is connected to a right end of the front plate 3232. A rear end of the right plate 3235 is not connected to a right end of the rear plate 3233. That is, the right plate 3235 is a separate member from the rear plate 3233. The right plate 3235 faces the left plate 3234 in the left-right direction. The right plate 3235 covers the power reception coil 322 when viewed from the left-right direction.

A length of the right plate 3235 in the front-rear direction is substantially the same as the length of the top plate 3231 in the front-rear direction. A height (a length in the up-down direction) of the right plate 3235 is substantially the same as the height of the front plate 3232.

The length of the right plate 3235 in the front-rear direction is shorter than the length of the top plate 3231 in the left-right direction. The length of the right plate 3235 in the front-rear direction is 1/2 of the length of the top plate 3231 in the left-right direction or less. In this embodiment, the length of the right plate 3235 in the front-rear direction is 1/3 of the length of the top plate 3231 in the left-right direction or less.

The shield 323 further includes an extension plate 3236 and an extension plate 3237. These plates will be described with reference to FIG. 3 and FIG. 4.

As illustrated in FIG. 3, the extension plate 3236 extends forwardly from a lower end of the front plate 3232. That is, a rear end of the extension plate 3236 is connected to the lower end of the front plate 3232. The extension plate 3236 is substantially in parallel to the top plate 3231.

As illustrated in FIG. 4, a length of the extension plate 3236 in the front-rear direction is shorter than the length of the top plate 3231 in the front-rear direction. In the example illustrated in FIG. 4, the length of the extension plate 3236 in the front-rear direction is substantially 1/2 of the length of the top plate 3231 in the front-rear direction.

As illustrated in FIG. 4, the length of the extension plate 3236 in the front-rear direction is larger than the gap formed between the front plate 3232 and the power reception coil 322. In the example illustrated in FIG. 4, the length of the extension plate 3236 in the front-rear direction is substantially 1.5 times the size of the gap formed between the front plate 3232 and the power reception coil 322.

As illustrated in FIG. 4, the length of the extension plate 3236 in the front-rear direction is substantially the same as the length of the power reception coil 322 in the front-rear direction. That is, in the example illustrated in FIG. 4, the length of the extension plate 3236 in the front-rear direction is larger than a length of the core 3222 in the front-rear direction.

As illustrated in FIG. 3, the extension plate 3237 extends backwardly from a lower end of the rear plate 3233. That is, a front end of the extension plate 3237 is connected to the lower end of the rear plate 3233. The extension plate 3237 is substantially in parallel to the top plate 3231.

As illustrated in FIG. 4, a length of the extension plate 3237 in the front-rear direction is shorter than the length of the top plate 3231 in the front-rear direction. In the example illustrated in FIG. 4, the length of the extension plate 3237 in the front-rear direction is longer than 1/2 of a length of the substrate 324 in the front-rear direction.

As illustrated in FIG. 4, the length of the extension plate 3237 in the front-rear direction is larger than the length of the extension plate 3236 in the front-rear direction. In the example illustrated in FIG. 4, the length of the extension plate 3237 in the front-rear direction is substantially 1.2 times the length of the extension plate 3236 in the front-rear direction.

As illustrated in FIG. 4, the length of the extension plate 3237 in the front-rear direction is larger than the gap formed between the rear plate 3233 and the power reception coil 322. In the example illustrated in FIG. 4, the length of the extension plate 3237 in the front-rear direction is substantially three times the size of the gap formed between the rear plate 3233 and the power reception coil 322.

As illustrated in FIG. 4, the length of the extension plate 3237 in the front-rear direction is larger than the length of the power reception coil 322 in the front-rear direction. That is, in the example illustrated in FIG. 4, the length of the extension plate 3237 in the front-rear direction is larger than the length of the core 3222 in the front-rear direction.

In this embodiment, the shield 323 includes two members (a first shield 323A and a second shield 323B). The first shield 323A includes the top plate 3231, the front plate 3232, the extension plate 3236, the left plate 3234, and the right plate 3235. The second shield 323B includes the rear plate 3233 and the extension plate 3237.

The substrate 324 is connected to the power reception coil 322 and the battery unit 22. A circuit element that controls power supply to the battery unit 22 is mounted on the substrate 324.

As illustrated in FIG. 3, the substrate 324 is arranged above the extension plate 3237. As illustrated in FIG. 4, a part of the substrate 324 overlaps the extension plate 3237 when viewed from the up-down direction.

As illustrated in FIG. 3, the substrate 324 is arranged behind the rear plate 3233. The substrate 324 overlaps the rear plate 3233 when viewed from the front-rear direction.

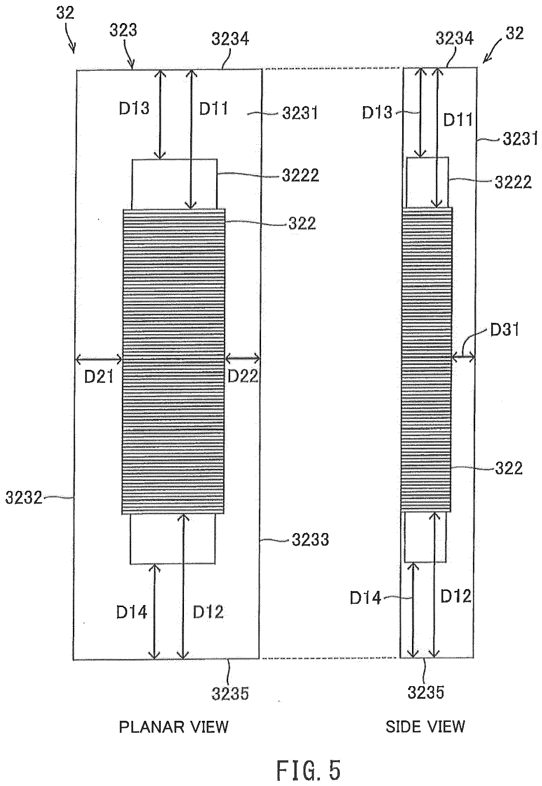

FIG. 5 is a view illustrating a relationship between the power reception coil 322 and the shield 323. With reference to FIG. 5, the relationship between the power reception coil 322 and the shield 323 will be described. Note that, in FIG. 5, illustration of the extension plate 3236 and the extension plate 3237 is omitted.

The shield 323 includes the top plate 3231 as a flat plate-shaped main body and sidewalls 3232, 3233, 3234, and 3235. The sidewalls 3232, 3233, 3234, and 3235 are arranged around the power reception coil 322 when viewed from a direction that is perpendicular to a surface of the top plate 3231. The sidewalls 3232, 3233, 3234, and 3235 include a front wall 3232 and a rear wall 3233 as a pair of first sidewalls and a left wall 3234 and a right wall 3235 as a pair of second sidewalls.

The power reception coil 322 is located between the front wall 3232 and the rear wall 3233 in the front-rear direction. The power reception coil 322 is located between the left wall 3234 and the right wall 3235 in the left-right direction.

A right end of each of the front wall 3232 and the rear wall 3233 is located on the right side relative to the right end of the power reception coil 322. A left end of each of the front wall 3232 and the rear wall 3233 is located on the left side relative to the left end of the power reception coil 322. A front end of each of the left wall 3234 and the right wall 3235 is located forward relative to a front end of the power reception coil 322. A rear end of each of the left wall 3234 and the right wall 3235 is located backward relative to a rear end of the power reception coil 322.

The left end of the top plate 3231 is located on the left side relative to the left end of the power reception coil 322. The right end of the top plate 3231 is located on the right side relative to the right end of the power reception coil 322. The front end of the top plate 3231 is located forward relative to the front end of the power reception coil 322. The rear end of the top plate 3231 is located backward relative to the rear end of the power reception coil 322.

A shortest distance D21 from the front wall 3232 to the front end of the power reception coil 322 and a shortest distance D22 from the rear wall 3233 to the rear end of the power reception coil 322 are shorter than a shortest distance D11 from the left wall 3234 to the left end of the power reception coil 322 and a shortest distance D12 from the right wall 3235 to the right end of the power reception coil 322.

The shortest distance D11 from the left wall 3234 to the left end of the power reception coil 322 and the shortest distance D12 from the right wall 3235 to the right end of the power reception coil 322 are longer than a shortest distance D31 from the top plate 3231 to the power reception coil 322.

The shortest distance D21 from the front wall 3232 to the front end of the power reception coil 322 and the shortest distance D22 from the rear wall 3233 to the rear end of the power reception coil 322 are longer than the shortest distance D31 from the top plate 3231 to the power reception coil 322.

A shortest distance D13 from the left plate 3234 to the left end of the core 3222 and a shortest distance D14 from the right plate 3235 to the right end of the core 3222 are larger than the shortest distance D21 from the front plate 3232 to the power reception coil 322 and the shortest distance D22 from the rear plate 3233 to the power reception coil 322.

### [Parking Equipment]

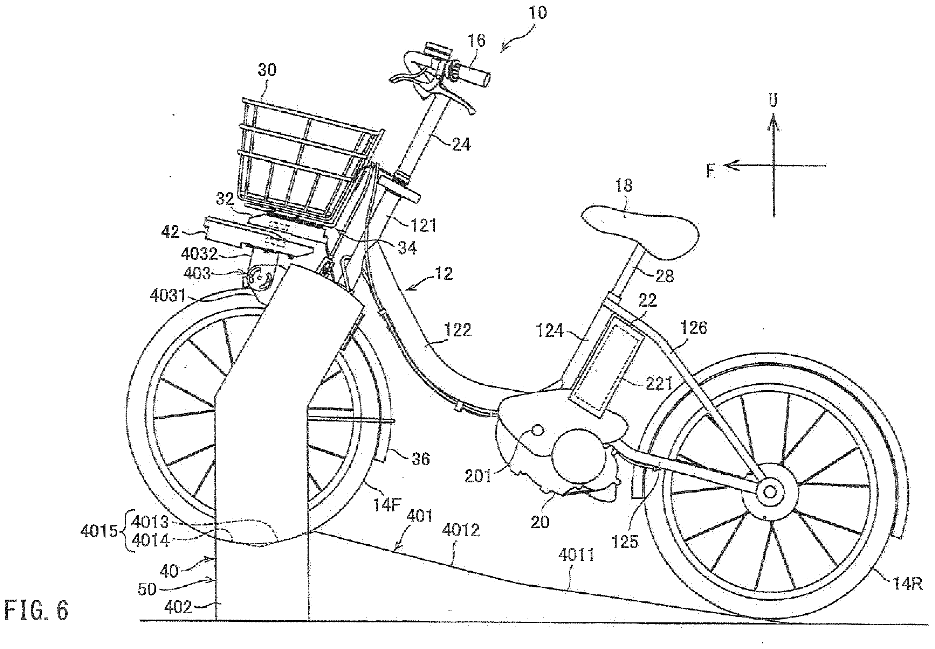

As illustrated in FIG. 6, the electric power-assisted bicycle 10 is parked in a parking equipment 40. The parking equipment 40 includes a power transmission device 42. In a state in which the electric power-assisted bicycle 10 is parked in the parking equipment 40, power transmission from the power transmission device 42 to the power reception device 32 is performed. Thus, a battery 221 can be charged. That is, a charging system 50 that includes the power reception device 32 and the power transmission device 42 and charges the battery 221 is realized.

With reference to FIG. 6, the parking equipment 40 will be described. FIG. 6 is a left-side view illustrating a state in which the electric power-assisted bicycle 10 is parked in the parking equipment 40.

The parking equipment 40 includes a guide passage 401. The guide passage 401 guides the front wheel 14F of the electric power-assisted bicycle 10 to a predetermined position.

The guide passage 401 includes a slope 4011, a slope 4012, a slope 4013, and a slope 4014. These slopes will be described below.

The slope 4011 extends in the front-rear direction. A front end of the slope 4011 is located above a rear end of the slope 4011. The rear end of the slope 4011 is substantially at the same position as that of a road surface in the up-down direction.

The slope 4012 extends in the front-rear direction. A front end of the slope 4012 is located above a rear end of the slope 4012. The rear end of the slope 4012 is connected to the front end of the slope 4011. An inclination angle (an inclination angle with respect to the road surface) of the slope 4012 is larger than an inclination angle of the slope 4011.

The slope 4013 extends in the front-rear direction. A front end of the slope 4013 is located below a rear end of the slope 4013. The rear end of the slope 4013 is connected to the front end of the slope 4012. A length of the slope 4013 in the front-rear direction is smaller than a radius of the front wheel 14F.

The slope 4014 extends in the front-rear direction. A front end of the slope 4014 is located above a rear end of the slope 4014. The rear end of the slope 4014 is connected to the front end of the slope 4013. That is, the slope 4013 and the slope 4014 form a recess 4015. The front wheel 14F fits in the recess 4015, that is, the front wheel 14F is in contact with the slope 4013 and the slope 4014, and thereby, movement of the electric power-assisted bicycle 10 in the front-rear direction is restricted.

A length of the slope 4014 in the front-rear direction is smaller than the radius of the front wheel 14F. The length of the slope 4014 in the front-rear direction is smaller than the length of the slope 4013 in the front-rear direction. A length of the slope 4014 in the up-down direction is smaller than a length of the slope 4013 in the up-down direction.

The parking equipment 40 further includes a pair of left and right posts 402, 402. The left post 402 is arranged on a left side relative to the guide passage 401. The right post 402 is arranged on a right side relative to the guide passage 401. That is, the guide passage 401 is located between the pair of posts 402, 402 in the left-right direction. In an example illustrated in FIG. 6, the recess 4015 formed in a front part of the guide passage 401 is located between the pair of posts 402, 402 in the left-right direction. The pair of posts 402, 402 is arranged left-right symmetrical. Therefore, in FIG. 6, only the left post 402 is illustrated.

The parking equipment 40 further includes a bracket 403. The power transmission device 42 is attached to the pair of posts 402, 402 via the bracket 403.

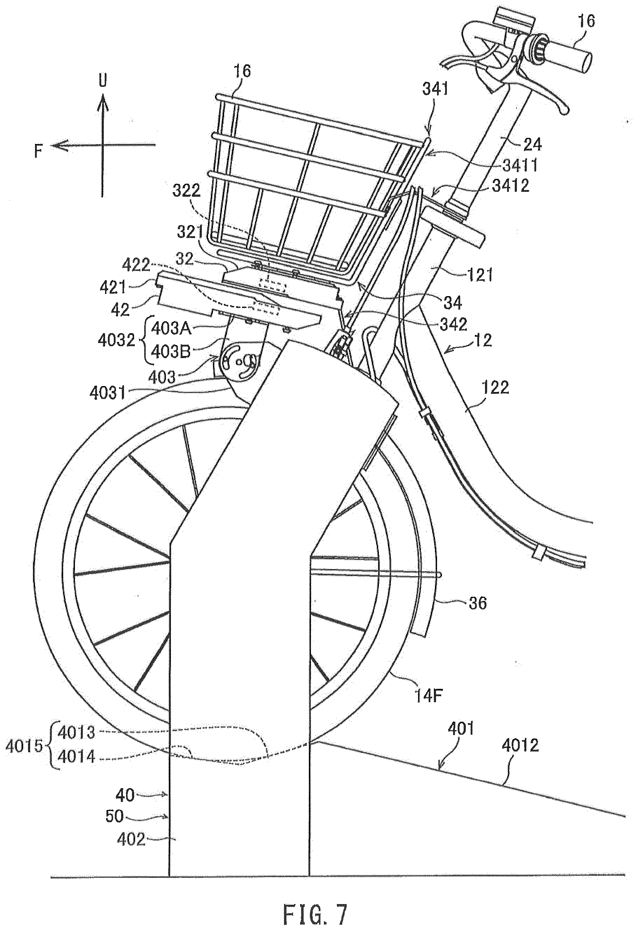

The bracket 403 includes a pair of left and right first brackets 4031, 4031 and a second bracket 4032. These brackets will be described below with reference to FIG. 7. FIG. 7 is a left-side view illustrating an enlarged part of FIG. 6.

The pair of first brackets 4031, 4031 is arranged left-right symmetrical. Therefore, in FIG. 6, only the left first bracket 4031 is illustrated.

The left first bracket 4031 is fixed to the left post 402. The right first bracket 4031 is fixed to the right post 402.

The second bracket 4032 includes a main body 403A and a pair of left and right legs 403B, 403B. These members will be described below.

The main body 403A has a plate shape. The main body 403A is attached to a lower surface of the power transmission device 42.

The pair of legs 403B, 403B is arranged left-right symmetrical. Therefore, in FIG. 7, only the left leg 403B is illustrated.

The left leg 403B is rotatably attached to the left first bracket 4031. The right leg 403B is rotatably attached to the right first bracket 4031. That is, the second bracket 4032 that supports the power transmission device 42 is rotatably attached to the pair of first brackets 4031, 4031. Thus, a mounting angle of the power transmission device 42 with respect to the pair of posts 402, 402 can be changed.

### [Power Transmission Device]

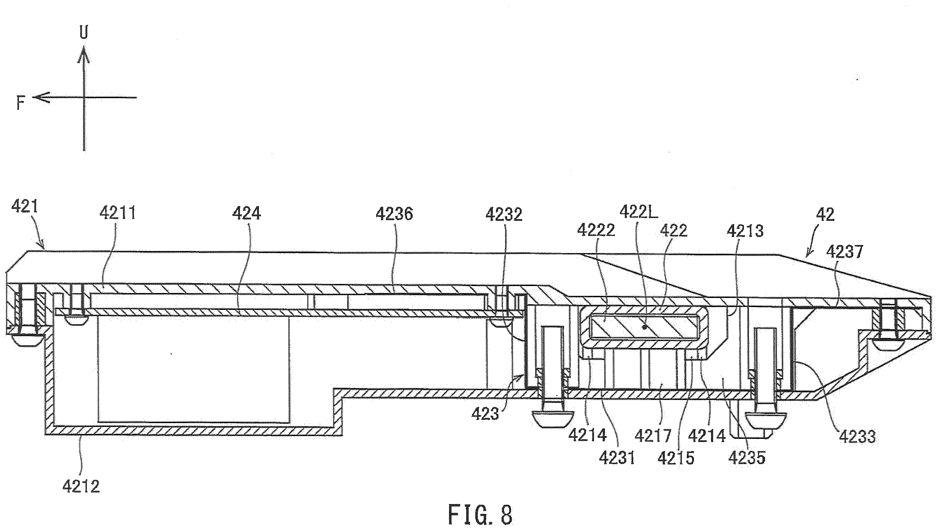

With reference to FIG. 8, the power transmission device 42 will be described. FIG. 8 is a left-side cross-sectional view of the power transmission device 42.

The power transmission device 42 includes a housing 421, the power transmission coil 422, a shield 423, and a substrate 424. These members will be described below.

The housing 421 includes an upper housing 4211 and a lower housing 4212. The upper housing 4211 is arranged above the lower housing 4212. The upper housing 4211 is fixed to the lower housing 4212. Thus, the housing 421 is formed. The power reception coil 422, the shield 423, and the substrate 424 are arranged in the housing 421.

The power transmission coil 422 is wound around a core 4222. The core 4222 has a rectangular parallelepiped shape, that is, a thick rectangular plate shape. The core 4222 is formed of a magnetic material. The magnetic material is, for example, iron.

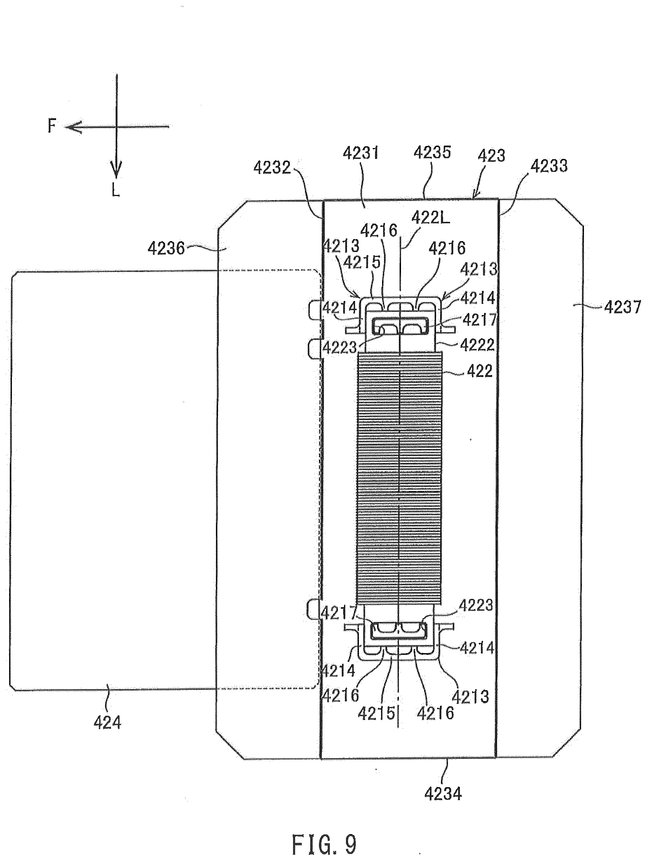

With reference to FIG. 9, the power transmission coil 422 will be described. FIG. 9 is a plan view illustrating the power transmission coil 422, the shield 423, and the substrate 424. That is, FIG. 9 is a view illustrating the power transmission coil 422, the shield 423, and the substrate 424 in a state in which the upper housing 4211 illustrated in FIG. 8 has been removed, when viewed from the top. Therefore, in FIG. 9, a part of the substrate 424 is concealed by the shield 423 located above the substrate 424. Note that, in FIG. 9, in order to illustrate a support state of the core 4222, support units 4213 and projections 4217 provided in the upper housing 4211 are illustrated.

First, the core 4222 around which the power transmission coil 422 is wound will be described. The core 4222 extends straight in the left-right direction with a substantially constant rectangular cross section (see FIG. 8). A hole 4223 is formed in each of both end parts of the core 4222 in the left-right direction. The hole 4223 extends straight in the up-down direction with a substantially constant opening shape (a substantially rectangular shape in this embodiment).

Each of the both end parts of the core 4222 in the left-right direction is supported by the support unit 4213. The support unit 4213 is formed in the upper housing 4211 (see FIG. 8). The support unit 4213 includes a pair of sidewalls 4214, 4214 and a connecting wall 4215.

Each of the pair of sidewalls 4214, 4214 projects downwardly from an inner surface of the upper housing 4211. The pair of sidewalls 4214, 4214 face one another the front-rear direction.

The connecting wall 4215 projects downwardly from an inner surface of the upper housing 4211. The connecting wall 4215 extends in the front-rear direction and is coupled to the pair of sidewalls 4214, 4214.

The connecting wall 4215 includes a plurality (two in this embodiment) of projections 4216. Each of the plurality of projections 4216 projects from a side surface (an inner side surface in the left-right direction) of the connecting wall 4215 in the left-right direction. When viewed from the up-down direction, each of the plurality of projections 4216 is located between the pair of sidewalls 4214, 4214.

Each of the both end parts of the core 4222 in the left-right direction is sandwiched between the pair of sidewalls 4214, 4214 in the front-rear direction. In this state, each of the plurality of projections 4216 is in contact with an end surface of the core 4222 in the left-right direction.

Also, in a state in which each of the both end parts of the core 4222 in the left-right direction is supported by the support unit 4213, the projection 4217 is inserted in each of the two holes 4223 formed in the core 4222. The projection 4217 projects downwardly from an inner surface of the upper housing 4211.

The power transmission coil 422 extends in the left-right direction (a longitudinal direction) of the core 4222. That is, the power transmission coil 422 is wound around the core 4222 about the axial line 422L that extends in the left-right direction (the longitudinal direction) of the core 4222. That is, the power transmission coil 422 is cylindrically wound about the axial line 422L. In short, the power transmission coil 422 is a solenoid coil.

A left end of the power transmission coil 422 is located on the right side (more to an inner side in the left-right direction) relative to a left end of the core 4222. A right end of the power transmission coil 422 is located on the left side (to the inner side in the left-right direction) relative to a right end of the core 4222.

A length of the power transmission coil 422 in the left-right direction (the axial direction) is longer than the length of the power transmission coil 422 in the front-rear direction (the width direction). The length of the power transmission coil 422 in the left-right direction (the axial direction) is, for example, twice the length of the power transmission coil 422 in the front-rear direction (the width direction) or more. In an example illustrated in FIG. 9, the length of the power transmission coil 422 in the left-right direction (the axial direction) is substantially three times the length of the power transmission coil 422 in the front-rear direction (the width direction).

With reference to FIG. 8, the power transmission coil 422 will be described. The length of the power transmission coil 422 in the front-rear direction (the width direction) is longer than the length of the power transmission coil 422 in the up-down direction (the height direction). The length of the power transmission coil 422 in the front-rear direction (the width direction) is twice the length of the power transmission coil 422 in the up-down direction (the height direction) or more. In an example illustrated in FIG. 8, the length of the power transmission coil 422 in the front-rear direction (the width direction) is substantially three times the length of the power transmission coil 422 in the up-down direction (the height direction).

### [Shield]

With reference to FIG. 8, the shield 423 will be described. The shield 423 is formed of a conductor. The conductor is, for example, copper, aluminum, or the like.

The shield 423 includes a bottom plate 4231, a front plate 4232, and a rear plate 4233. These plates will be described below.

The bottom plate 4231 is arranged below the power transmission coil 422. A gap is formed between the bottom plate 4231 and the power transmission coil 422. The bottom plate 4231 has a rectangular shape. The bottom plate 4231 covers the power transmission coil 422 when viewed from the up-down direction.

The front plate 4232 is arranged forward relative to the power transmission coil 422. A gap is formed between the front plate 4232 and the power transmission coil 422.

The front plate 4232 has a rectangular shape. A lower end of the front plate 4232 is connected to a front end of the bottom plate 4231. A length of the front plate 4232 in the left-right direction is substantially the same as a length of the bottom plate 4231 in the left-right direction. The front plate 4232 covers the power transmission coil 422 when viewed from the front-rear direction.

The rear plate 4233 is arranged backward relative to the power transmission coil 422. A gap is formed between the rear plate 4233 and the power transmission coil 422. In the example illustrated in FIG. 8, the gap formed between the rear plate 4233 and the power transmission coil 422 is larger than the gap formed between the front plate 4232 and the power transmission coil 422.

The rear plate 4233 has a rectangular shape. A lower end of the rear plate 4233 is not connected to a rear end of the bottom plate 4231. That is, the rear plate 4233 is a separate member from the bottom plate 4231. A length of the rear plate 4233 in the left-right direction is substantially the same as a length of the bottom plate 4231 in the left-right direction. The rear plate 4233 faces the front plate 4232 in the front-rear direction. In the example illustrated in FIG. 8, a height (a length in the up-down direction) of the rear plate 4233 is shorter than a height of the front plate 4232. The rear plate 4233 covers the power transmission coil 422 when viewed from the front-rear direction.

The shield 423 further includes a left plate 4234 and a right plate 4235. These plates will be described with reference to FIG. 9.

The left plate 4234 is arranged on the left side relative to the power transmission coil 422. A gap is formed between the left plate 4234 and the power transmission coil 422.

The gap formed between the left plate 4234 and the power transmission coil 422 is larger than the gap formed between the front plate 4232 and the power transmission coil 422. The gap formed between the left plate 4234 and the power transmission coil 422 is larger than the gap formed between the rear plate 4233 and the power transmission coil 422.

The left plate 4234 is arranged on the left side relative to the core 4222 around which the power transmission coil 422 is wound. A gap is formed between the left plate 4234 and the core 4222.

The gap formed between the left plate 4234 and the core 4222 is larger than the gap formed between the front plate 4232 and the power transmission coil 422. The gap formed between the left plate 4234 and the core 4222 is larger than the gap formed between the rear plate 4233 and the power transmission coil 422.

The left plate 4234 has a rectangular shape. A lower end of the left plate 4234 is connected to a left end of the bottom plate 4231. A front end of the left plate 4234 is connected to a left end of the front plate 4232. A rear end of the left plate 4234 is not connected to a left end of the rear plate 4233. That is, the left plate 4234 is a separate member from the rear plate 4233. The left plate 4234 covers the power transmission coil 422 when viewed from the left-right direction.

A length of the left plate 4234 in the front-rear direction is substantially the same as a length of the bottom plate 4231 in the front-rear direction. A height (a length in the up-down direction) of the left plate 4234 is substantially the same as a height of the rear plate 4233.

The length of the left plate 4234 in the front-rear direction is shorter than the length of the bottom plate 4231 in the left-right direction. The length of the left plate 4234 in the front-rear direction is 1/2 of the length of the bottom plate 4231 in the left-right direction or less. In this embodiment, the length of the left plate 4234 in the front-rear direction is 1/3 of the length of the bottom plate 4231 in the left-right direction or less.

The right plate 4235 is arranged on the right side relative to the power transmission coil 422. A gap is formed between the right plate 4235 and the power transmission coil 422.

The gap formed between the right plate 4235 and the power transmission coil 422 is larger than the gap formed between the front plate 4232 and the power transmission coil 422. The gap formed between the right plate 4235 and the power transmission coil 422 is larger than the gap formed between the rear plate 4233 and the power transmission coil 422. The gap formed between the right plate 4235 and the power transmission coil 422 is substantially the same as the gap formed between the left plate 4234 and the power transmission coil 422.

The right plate 4235 is arranged on the right side relative to the core 4222 around which the power transmission coil 422 is wound. A gap is formed between the right plate 4235 and the core 4222.

The gap formed between the right plate 4235 and the core 4222 is larger than the gap formed between the front plate 4232 and the power transmission coil 422. The gap formed between the right plate 4235 and the core 4222 is larger than the gap formed between the rear plate 4233 and the power transmission coil 422.

The right plate 4235 has a rectangular shape. A lower end of the right plate 4235 is connected to a right end of the bottom plate 4231. A front end of the right plate 4235 is connected to a right end of the front plate 4232. A rear end of the right plate 4235 is not connected to a right end of the rear plate 4233. That is, the right plate 4235 is a separate member from the rear plate 4233. The right plate 4235 faces the left plate 4234 in the left-right direction. The right plate 4235 covers the power transmission coil 422 when viewed from the left-right direction.

A length of the right plate 4235 in the front-rear direction is substantially the same as the length of the bottom plate 4231 in the front-rear direction. A height (a length in the up-down direction) of the right plate 4235 is substantially the same as the height of the rear plate 4233.

The length of the right plate 4235 in the front-rear direction is shorter than the length of the bottom plate 4231 in the left-right direction. The length of the right plate 4235 in the front-rear direction is 1/2 of the length of the bottom plate 4231 in the left-right direction or less. In this embodiment, the length of the right plate 4235 in the front-rear direction is 1/3 of the length of the bottom plate 4231 in the left-right direction or less.

The shield 423 further includes an extension plate 4236 and an extension plate 4237. These extension plates will be described with reference to FIG. 8 and FIG. 9.

As illustrated in FIG. 8, the extension plate 4236 extends forwardly from an upper end of the front plate 4232. That is, a rear end of the extension plate 4236 is connected to the upper end of the front plate 4232. The extension plate 4236 is substantially in parallel to the bottom plate 4231.

As illustrated in FIG. 9, a length of the extension plate 4236 in the front-rear direction is shorter than the length of the bottom plate 4231 in the front-rear direction. As illustrated in FIG. 9, the length of the extension plate 4236 in the front-rear direction is larger than the gap formed between the front plate 4232 and the power transmission coil 422.

As illustrated in FIG. 8, the extension plate 4237 extends backwardly from an upper end of the rear plate 4233. That is, a front end of the extension plate 4237 is connected to the upper end of the rear plate 4233. The extension plate 4237 is substantially in parallel to the bottom plate 4231.

As illustrated in FIG. 9, the length of the extension plate 4237 in the front-rear direction is shorter than the length of the bottom plate 4231 in the front-rear direction. As illustrated in FIG. 9, the length of the extension plate 4237 in the front-rear direction is larger than the gap formed between the rear plate 4233 and the power transmission coil 422.

The substrate 424 is connected to the power transmission coil 422 and a commercial power supply (not illustrated). A circuit element that controls power supply to the power reception device 32 is mounted on the substrate 424.

The substrate 424 is arranged under the extension plate 4236. A part of the substrate 424 overlaps the extension plate 4236 when viewed from the up-down direction.

As is clear from the description above, in this embodiment, the power transmission device 42 includes the solenoid power transmission coil 422 and the shield 423 including the bottom plate 4231 as a flat plate-shaped main body. The shield 423 is arranged in a position that overlaps the power transmission coil 422 when viewed from a direction that is perpendicular to a surface of the bottom plate 4231. The shield 423 further includes the front plate 4232 (the rear plate 4233) as the first transmission sidewall and the left plate 4234 (the right plate 4235) as the second transmission sidewall. The front plate 4232 (the rear plate 4233) is arranged on one side of the power transmission coil 422 in a direction that is perpendicular to the axial line 422L of the power transmission coil 422 and also in a direction that is in parallel to the bottom plate 4231. The left plate 4234 (the right plate 4235) is arranged on one side of the power transmission coil 422 in a direction in which the axial line 422L extends. A distance from the power transmission coil 422 to the front plate 4232 (the rear plate 4233) in the direction that is perpendicular to the axial line 422L of the power transmission coil 422 and also in the direction that is in parallel to the bottom plate 4231 is shorter than a distance from the power transmission coil 422 to the left plate 4234 (the right plate 4235) in the direction in which the axial line 422L extends.

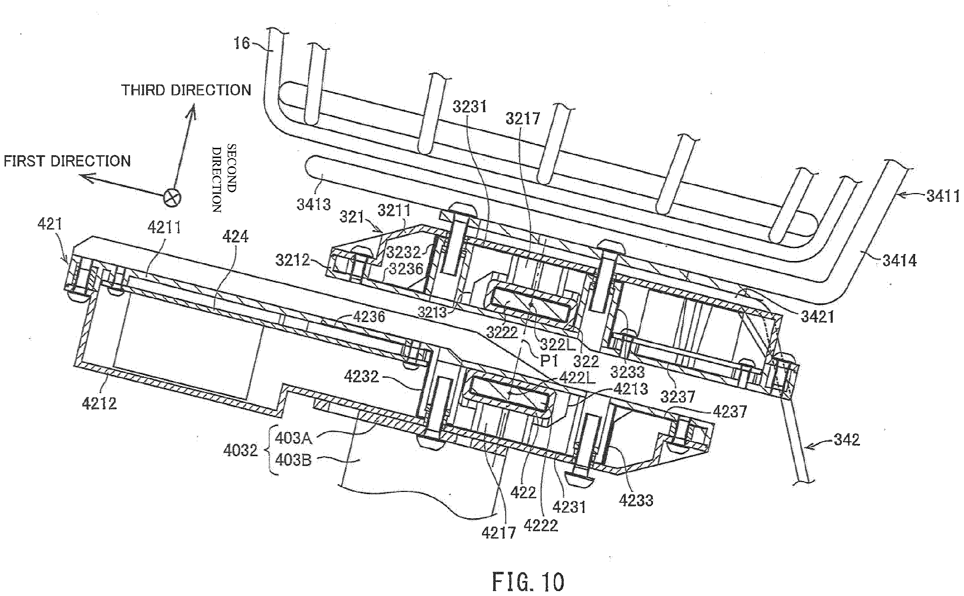

FIG. 10 is a longitudinal-sectional view illustrating a relationship between the power reception device 32 and the power transmission device 42 in a state in which the battery 221 in the electric power-assisted bicycle 10 is charging.

Although, in FIG. 10, also for the purpose of simplifying the explanation, a case in which positions of the power reception coil 322 of the power reception device 32 and the power transmission coil 422 of the power transmission device 42 are in an ideal state is illustrated, the positions of the power reception coil 322 and the power transmission coil 422 are not always in the ideal state. In this case, the case in which the positions of the power reception coil 322 and the power transmission coil 422 are in then ideal state is a case in which the power reception coil 322 and the power transmission coil 422 are located such that power transmission efficiency is the highest, that is, a coupling coefficient is the highest. Depending on how the electric power-assisted bicycle 10 is parked, there may be a case in which the positions of the power reception coil 322 and the power transmission coil 422 are not in the ideal state (that is, a state illustrated in FIG. 10). Note that, although not clearly illustrated in FIG. 10, the power reception coil 322 is located in the same position as that of the power transmission coil 422 in the left-right direction (that is, a second direction, which will be described later).

Also, although, in FIG. 10, for positions of the shield 323 of the power reception device 32 and the shield 423 of the power transmission device 42, an ideal state is illustrated, the positions of the shield 323 and the shield 423 are not always in the ideal state. In this case, the case in which the positions of the shield 323 and the shield 423 are in an ideal state is a case in which the shield 323 and the shield 423 are located such that leakage of a magnetic flux to the outside is most efficiently prevented. Depending on how the electric power-assisted bicycle 10 is parked, there may be a case in which the positions of the shield 323 and the shield 423 are not in the ideal state (that is, the state illustrated in FIG. 10).

With reference to FIG. 10, the positions of the power reception coil 322 and the power transmission coil 422, and the positions of the shield 323 and the shield 423 will be described.

The core 3222 included in the power reception coil 322 is arranged in parallel to the core 4222 included in the power transmission coil 422. That is, the power reception coil 322 wound around the core 3222 is arranged in parallel to the power transmission coil 422 wound around the core 4222. In short, the axial line 322L of the power reception coil 322 extends in parallel to the axial line 422L of the power transmission coil 422.

As described above, in this embodiment, a case in which the positions of the power reception coil 322 and the power transmission coil 422 are ideal has been described. One condition for the ideal state is that the axial line 322L of the power reception coil 322 extends in parallel to the axial line 422L of the power transmission coil 422. Also, another condition for the ideal state is that the positions of the power reception coil 322 and the power transmission coil 422 in the left-right direction match one another. Alternatively, still another condition for the ideal state is that central positions of the power reception coil 322 and the power transmission coil 422 in the left-right direction match one another.

A plane P1 on which the axial line 322L of the power reception coil 322 and the axial line 422L of the power transmission coil 422 are located is set. A direction in which the front plate 3232 and the rear plate 3233 that are included in the shield 323 of the power reception device 32 face one another is a direction (a first direction) which is perpendicular to the plane P1. The first direction is perpendicular to the direction (the second direction) in which the axial line 322L of the power reception coil 322 extends. A direction (a third direction) in which a straight line that is perpendicular to the top plate 3231 included in the shield 323 is perpendicular to the first direction and the second direction.

The top plate 3231 included in the shield 323 is arranged in parallel to the bottom plate 4231 included in the shield 423. The extension plate 3236 included in the shield 323 is arranged in parallel to the extension plate 4236 included in the shield 423. The extension plate 3237 included in the shield 323 is arranged in parallel to the extension plate 4237 included in the shield 423. An end of the extension plate 3236 of the shield 323 is located in the same position as that of an end of the extension plate 4236 of the shield 423 in the first direction. An end of the extension plate 3237 of the shield 323 is located in the same position as that of an end of the extension plate 4237 of the shield 423 in the first direction. The front plate 3232 of the shield 323 is more distant from the plane P1 than the front plate 4232 of the shield 423 is in the first direction. The rear plate 3233 of the shield 323 is located closer to the plane P1 than the rear plate 4233 of the shield 423 is in the first direction.

As described above, the axial line 322L of the power reception coil 322 and the axial line 422L of the power transmission coil 422 are located on the plane P1. That is, the axial line 322L of the power reception coil 322 and the axial line 422L of the power transmission coil 422 are located in the same position in the first direction.

In the charging system 50, power transmission from the power transmission coil 422 included in the power transmission device 42 to the power reception coil 322 included in the power reception device 32 is performed in a state in which the electric power-assisted bicycle 10 is parked in the parking equipment 40. Thus, it is possible to charge the battery 221.

In the charging system 50, a distance (a distance in the first direction) between the front plate 3232 (or the rear plate 3233) included in the shield 323 and the power reception coil 322 is shorter than a distance (a distance in the second direction) between the left plate 3234 (or the right plate 3235) included in the shield 323 and the power reception coil 322. Therefore, the coupling coefficient is increased. As a result, power transmission efficiency is increased.

As described above, the sidewalls (the left plate 3234 and the right plate 3235) are provided in the power reception coil 322, and thereby, an area of an opening part toward an outside space is reduced, so that a magnetic path that leads to leakage of a magnetic flux to the outside may be blocked. Thus, a leaked magnetic flux is reduced and the coupling coefficient is increased. Also, a necessary space is provided between the power reception coil 322 and the sidewalls (the left plate 3234 and the right plate 3235), and thereby, a necessary magnetic path for power transmission may be ensured (including a case in which a positional shift has occurred), so that the coupling coefficient is increased.

In the charging system 50, a distance (a distance in the first direction) between the front plate 4232 (or the rear plate 4233) included in the shield 423 and the power transmission coil 422 is shorter than a distance (a distance in the second direction) between the left plate 4234 (or the right plate 4235) included in the shield 423 and the power transmission coil 422. Therefore, the coupling coefficient is further increased. As a result, power transmission efficiency is further increased.

As described above, the sidewalls (the left plate 4234 and the right plate 4235) are provided in the power transmission coil 422, and thereby, an area of an opening part toward an outside space is reduced, so that a magnetic path that leads to leakage of a magnetic flux to the outside may be blocked. Thus, a leaked magnetic flux is reduced and the coupling coefficient is increased. Also, a necessary space is provided between the power transmission coil 422 and the sidewalls (the left plate 4234 and the right plate 4235), and thereby, a necessary magnetic path for power transmission may be ensured (including a case in which a positional shift has occurred), so that the coupling coefficient is increased.

In the charging system 50, in the third direction, the extension plate 3236 of the shield 323 overlaps the extension plate 4236 of the shield 423, and the extension plate 3237 of the shield 323 overlaps the extension plate 4237 of the shield 423. Therefore, a magnetic flux hardly leaks. As a result, the coupling coefficient is increased.

Increase of the coupling coefficient may be checked by a simulation. The simulation may be performed, for example, using a commercially available electromagnetic field analysis software. Conditions for the simulation will be described below.

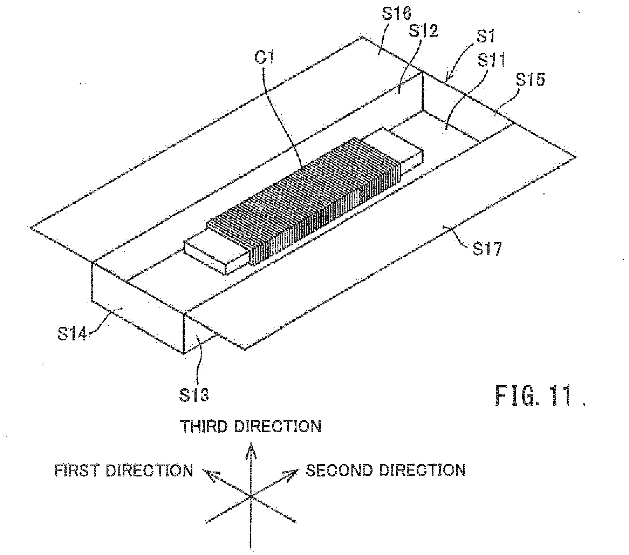

FIG. 11 illustrates a shield S1 that was used in a simulation. The shield S1 was obtained by modeling the shield 323. Similar to the shield 323, the shield S1 includes a flat plate S11 as a main body, a front wall S12, a rear wall S13, a left wall S14, a right wall S15, an extension plate S16, and an extension plate S17. Each of the front wall S12, the rear wall S13, the left wall S14, and the right wall S15 is connected to the flat plate S11. The extension plate S16 is connected to the front wall S12. The extension plate S17 is connected to the rear wall S13.

A material of the shield S1 was aluminum. The thickness of the shield S1 was 0.3 mm. The flat plate S11 was formed to have a length of 56 mm in the first direction and a length of 200 mm in the second direction. Each of the front wall S12 and the rear wall S13 was formed to have a length of 200 mm in the second direction and a length of 20 mm in the third direction. Each of the left wall S14 and the right wall S15 was formed to have a length of 56 mm in the first direction and a length of 20 mm in the third direction. Each of the extension plate S16 and the extension plate S17 was formed to have a length of 37 mm in the first direction and a length of 200 mm in the second direction.

The shield S1 was arranged so as to cover a coil C1. The coil C1 was obtained by modeling the power reception coil 322. A distance from the coil C1 to the left wall S14 (or the right wall S15) was 55 mm. A distance from the coil C1 to the front wall S12 (or the rear wall S13) was 14 mm. The coil C1 was formed to have a length of 28 mm in the first direction, a length of 90 mm in the second direction, and a length of 9 mm in the third direction. A thickness of a winding wire of the coil C1 was 1.5 mm. A distance (a distance in the third direction) from the coil C1 to the flat plate S11 was 10.5 mm.

Note that, as a shield obtained by modeling the shield 423, a shield whose top and bottom were inverted as compared to the shield S1 was used. When the simulation was performed, a distance between coils was 20 mm.

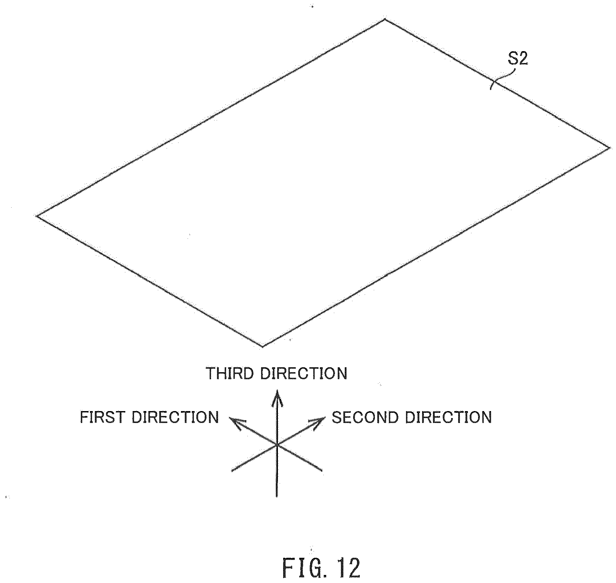

Also, for comparison, as illustrated in FIG. 12, a case in which a flat plate-shaped shield S2 was used for each of a shield included in a power reception device and a shield included in a power transmission device was also simulated. The shield S2 was formed to have a length of 130 mm in the first direction and a length of 200 mm in the second direction. A distance (a distance in the third direction) from the coil C1 to the shield S2 was 10.5 mm.

In a simulation (a first working example) in which the shield S1 was used for each of a shield included in a power reception device and a shield included in a power transmission device, the coupling coefficient was 0.48. In a simulation (a first comparative example) in which the shield S2 was used for each of a shield included in a power reception device and a shield included in a power transmission device, the coupling coefficient was 0.381. Therefore, it was confirmed that, in the charging system 50 according to this embodiment, the coupling coefficient was increased.

Note that a shield included in a power transmission device may not be the same as a shield included in a power reception device. For example, in a simulation (a second working example) of a case in which the shield S1 was used as a shield include in a power reception device and the shield S2 was used as a shield included in a power transmission device, the coupling coefficient was 0.402. It was confirmed that, in the second working example, the coupling coefficient was increased as compared to the first comparative example.

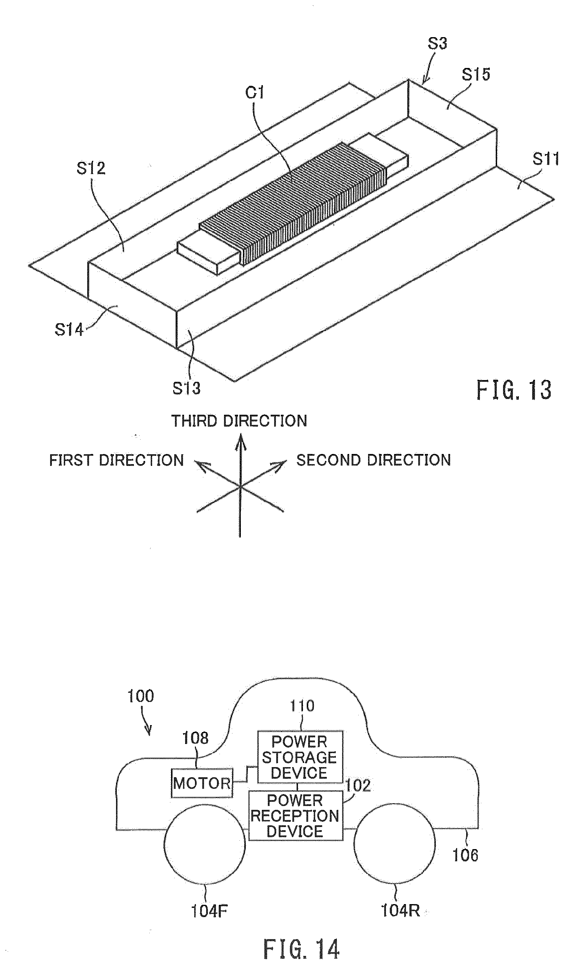

Also, as illustrated in FIG. 13, a shield S3 that is included in each of a power reception device and a power transmission device may be configured not to include two extension plates. In a simulation (a third working example) of this case, the coupling coefficient was 0.43. It was confirmed that, in the third working example, the coupling coefficient was increased as compared to the first comparative example.

In this case, in a simulation of a case in which a shield included in each of a power reception device and a power transmission device was the shield illustrated in FIG. 13 and also in which one of the shields was shifted by 20 mm in the first direction with respect to the other one of the shields, the coupling coefficient was 0.36. In a simulation of a case in which a shield that is included in each of a power reception device and a power transmission device was the shield illustrated in FIG. 11 and also in which one of the shields was shifted by 20 mm in the first direction with respect to the other one of the shields, the coupling coefficient was 0.42. It was confirmed that, in the charging system 50 according to this embodiment, even when a positional shift of the shield 323 and the shield 423 from one another in the first direction occurs, it is possible to suppress reduction in coupling coefficient.

In the electric power-assisted bicycle 10, a distance (a distance in the first direction) between the front plate 3232 (or the rear plate 3233) included in the shield 323 and the power reception coil 322 is shorter than a distance (a distance in the second direction) between the left plate 3234 (or the right plate 3235) included in the shield 323 and the power reception coil 322. Therefore, it is possible to reduce the size of the power reception device 32 to a compact size.

In the electric power-assisted bicycle 10, the distance from the front plate 3232 to the power reception coil 322 is longer than the distance from the rear plate 3233 to the power reception coil 322. Therefore, it is possible to reduce the size of the power reception device 32 to a compact size while reducing reduction in power transmission efficiency even when the power reception coil 322 is positionally shifted with respect to the power transmission coil 422.

In the electric power-assisted bicycle 10, the substrate 324 is arranged behind the rear plate 3233 included in the shield 323 and above the extension plate 3237 connected to the rear plate 3233. Therefore, the substrate 324 is hardly influenced by a magnetic flux.

Although, in this embodiment, a case in which the power reception coil 322 and the power transmission coil 422 are arranged in an ideal state and also the shield 323 and the shield 423 are arranged in an ideal state has been described as an example, even not in the above-described ideal state, as long as the power reception coil 322 and the shield 323 are in a predetermined relationship and also the power transmission coil 422 and the shield 423 are in a predetermined relationship, the coupling coefficient is increased.

With reference to FIG. 14, a vehicle 100 according to an embodiment of the present teaching will be described. The vehicle 100 includes a power reception device 102, left and right front wheels 104F, left and right rear wheels 104R, and a vehicle body 106. The power reception device 102 is connected to a power storage device 110 that supplies power to a motor 108 that drives the vehicle 100.

The power reception device 102 has a similar structure to that of the power reception device 32. That is, the power reception device 102 includes the power reception coil 322 and the shield 323.

The power reception device 102 is relatively-unmovably supported with respect to the vehicle body 106. In this state, the front wall 3232 and the rear wall 3233 included in the shield 323 are arranged side by side, for example, along a front-rear direction of the vehicle 100. Each of the front wall 3232 and the rear wall 3233 included in the shield 323 extends in a left-right direction of the vehicle 100.

The vehicle 100 includes the power reception device 102, and therefore, it is possible to efficiently perform charging of the power storage device 110.

Embodiments of the present teaching have been described above, but the above-described embodiments are merely illustrative examples of a preferred embodiment of the present teaching. Therefore, the present teaching is not limited to the above-described embodiments and the above-described embodiments can be appropriately modified and implemented without departing from the gist of the teaching.

In the above-described embodiments, as a straddled vehicle, an electric power-assisted bicycle has been described as an example, but the straddled vehicle is not limited to an electric power-assisted bicycle. As long as a straddled vehicle uses a driving force generated by a motor, the straddled vehicle is not particularly limited. A straddled vehicle may be, for example, a two-wheeled vehicle, a three-wheeled vehicle, or an ATV. A straddled vehicle may be a scooter-type straddled vehicle.

In the above-described embodiments, the power reception coil 322 included in the power reception device 32 may be configured not to include the core 3222. The power transmission coil 422 included in the power transmission device 42 may be configured not to include the core 4222.

In the above-described embodiments, each of the shields 323 and 423 may be formed of a metal net. Each of the shields 323 and 423 may be, for example, a member made of a synthetic resin to which a metal ink is applied. Each of the shields 323 and 423 may be a film made of a synthetic resin on which a metal is deposited. Each of the shields 323 and 423 may be formed by combining metal particles by a binder.

In the above-described embodiments, the power reception device 32 may be provided so as to be relatively unmovable with respect to the vehicle body frame 12.

Although, in the above-described embodiments, a power reception device that is used for a straddled vehicle and a vehicle has been described, application of the power reception device is not limited to a straddled vehicle or a vehicle.

## Claims

1. A power reception device (32, 102), comprising:
a solenoid power reception coil (322), the solenoid power reception coil (322) configured to generate an electric current flow due to a change in magnetic flux that is generated by electrical conduction to a power transmission coil (422) provided in a power transmission device (42); and
an electromagnetic shield (323) arranged such that a gap is formed between the electromagnetic shield (323) and the solenoid power reception coil (322),
wherein the electromagnetic shield (323) includes
a flat plate-shaped main body (3231), and
a sidewall arranged around the solenoid power reception coil (322) when viewed from a direction that is perpendicular to a surface of the main body (3231),
wherein
a direction that is perpendicular to an axial line of the solenoid power reception coil (322) and is in parallel to the main body (3231) is a first direction (F),
a direction in which the axial line of the solenoid power reception coil (322) extends is a second direction (L),
a direction that is perpendicular to each of the first direction (F) and the second direction (L) is a third direction (U),
the sidewall includes
a pair of first sidewalls (3232, 3233) which are located at both sides of the solenoid power reception coil (322) in the first direction (F) and each of which extends in the second direction (L) and the third direction (U), and
a pair of second sidewalls (3234, 3235) which are located at both sides of the solenoid power reception coil (322) in the second direction (L) and each of which extends in the first direction (F) and the third direction (U), and
one end of each of the pair of first sidewalls (3232, 3233) in the second direction (L) is located further outward in the second direction (L) than one end of the solenoid power reception coil (322) in the second direction (L),
the other end of each of the pair of first sidewalls (3232, 3233) in the second direction (L) is located further outward in the second direction (L) than to the other end of the solenoid power reception coil (322) in the second direction (L),
one end of each of the pair of second sidewalls (3234, 3235) in the first direction (F) is located further outward in the first direction (F) than one end of the solenoid power reception coil (322) in the first direction (F),
the other end of each of the pair of second sidewalls (3234, 3235) in the first direction (F) is located further outward in the first direction (F) than the other end of the solenoid power reception coil (322) in the first direction (F),
one end of the main body (3231) in the first direction (F) is located further outward in the first direction (F) than one end of the solenoid power reception coil (322) in the first direction (F),
the other end of the main body (3231) in the first direction (F) is located further outward in the first direction (F) than the other end of the solenoid power reception coil (322) in the first direction (F),
one end of the main body (3231) in the second direction (L) is located further outward in the second direction (L) than one end of the solenoid power reception coil (322) in the second direction (L),
the other end of the main body (3231) in the second direction (L) is located further outward in the second direction (L) than the other end of the solenoid power reception coil (322) in the second direction (L),
a shortest distance (D21) from a first sidewall (3232) of the pair of first sidewalls (3232, 3233) which is located at one end side in the first direction (F) to the one end of the solenoid power reception coil (322) in the first direction (F) and a shortest distance (D22) from a first sidewall (3233) of the pair of first sidewalls (3232, 3233) which is located at the other end side in the first direction (F) to the other end of the solenoid power reception coil (322) in the first direction (F) are shorter than a shortest distance (D11) from a second sidewall (3234) of the pair of second sidewalls (3234, 3235) which is located at one end side in the second direction (L) to the one end of the solenoid power reception coil (322) in the second direction (L) and a shortest distance (D12) from a second sidewall (3235) of the pair of second sidewalls (3234, 3235) which is located at the other end side in the second direction (L) to the other end of the solenoid power reception coil (322) in the second direction (L),
the shortest distance (D21) from the first sidewall (3232) of the pair of first sidewalls (3232, 3233) which is located at the one end side in the first direction (F) to the one end of the solenoid power reception coil (322) in the first direction (F) and the shortest distance (D22) from the first sidewall (3233) of the pair of first sidewalls (3232, 3233) which is located at the other end side in the first direction (F) to the other end of the solenoid power reception coil (322) in the first direction (F) are longer than a shortest distance (D31) from the main body (3231) to the solenoid power reception coil(322), and
the shortest distance (D11) from the second sidewall (3234) of the pair of second sidewalls (3234, 3235) which is located at the one end side in the second direction (L) to the one end of the solenoid power reception coil (322) in the second direction (L) and the shortest distance (D12) from the second sidewall (3235) of the pair of second sidewalls (3234, 3235) which is located at the other end side in the second direction (L) to the other end of the solenoid power reception coil (322) in the second direction (L) are longer than the shortest distance (D31) from the main body (3231) to the solenoid power reception coil (322).

2. The power reception device (32, 102) according to claim 1,
wherein the electromagnetic shield (323) further includes an extension piece (3236) that is provided in at least one of the pair of first sidewalls (3232, 3233) and extends away from the solenoid power reception coil (322) in a direction that is the first direction (F).

3. The power reception device (32, 102) according to claim 2, further comprising:
a substrate (324) which overlaps the extension piece (3236) when viewed from the third direction (U) and on which a circuit that is coupled to the solenoid power reception coil (322) is formed.

4. The power reception device (32, 102) according to any one of claims 1 to 3,
wherein at least one of the pair of first sidewalls (3232, 3233) is separated from the pair of second sidewalls (3234, 3235).

5. The power reception device (32, 102) according to any one of claims 1 to 4,
wherein, when viewed from the third direction (U), a length of each of the pair of first sidewalls (3232, 3233) in the second direction (L) is longer than a length of each of the pair of second sidewalls (3234, 3235) in the first direction (F).

6. The power reception device (32, 102) according to any one of claims 1 to 5,
wherein a length of the solenoid power reception coil (322) in the second direction (L) is longer than a length of the solenoid power reception coil (322) in the first direction (F).

7. The power reception device (32, 102) according to any one of claims 1 to 6,
wherein a length of the solenoid power reception coil (322) in the third direction (U) is shorter than a length of the solenoid power reception coil (322) in the first direction (F).

8. The power reception device (32, 102) according to any one of claims 1 to 7, further comprising:
a core (3222) inserted in the solenoid power reception coil (322).

9. The power reception device (32, 102) according to claim 8,
wherein a shortest distance (D13) from the second sidewall (3234) of the pair of second sidewalls (3234, 3235) which is located at the one end side in the second direction (L) to one end of the core (3222) in the second direction (L) and a shortest distance (D14) from the second sidewall (3235) of the pair of second sidewalls (3234, 3235) which is located at the other end side in the second direction (L) to the other end of the core (3222) in the second direction (L) are longer than a shortest distance (D21) from the first sidewall (3232) of the pair of first sidewalls (3232, 3233) which is located at the one end side in the first direction (F) to the one end of the solenoid power reception coil (322) in the first direction (F) and a shortest distance (D22) from the first sidewall (3233) of the pair of first sidewalls (3232, 3233) which is located at the other end side in the first direction (F) to the other end of the solenoid power reception coil (322) in the first direction (F).

10. A vehicle (100) comprising:
the power reception device (32, 102) according to any one of claims 1 to 9;
a right front wheel;
a left front wheel (104F);
a right rear wheel; and
a left rear wheel (104R),
wherein the solenoid power reception coil (322) is a solenoid power reception coil (322) for a vehicle, which is coupled to a power storage device (110) that supplies power to a drive motor (108) that drives the vehicle (100), and
the pair of first sidewalls (3232, 3233) included in the electromagnetic shield (323) is arranged side by side along one of a front direction, a right direction, an upper direction of the vehicle (100).

11. A vehicle (100) comprising:
the power reception device (32, 102) according to any one of claims 1 to 9;
a right front wheel;
a left front wheel (104F);
a right rear wheel; and
a left rear wheel (104R),
wherein the solenoid power reception coil (322) is a solenoid power reception coil (322) for a vehicle, which is coupled to a power storage device (110) that supplies power to a drive motor (108) that drives the vehicle (100), and
one of the pair of first sidewalls (3232, 3233) and the pair of second sidewalls (3234, 3235) included in the electromagnetic shield (323), which is longest when viewed from the third direction (U), is arranged along one of a front direction, a right direction, and an upper direction of the vehicle (100).

12. A vehicle (100) comprising:
the power reception device (32, 102) according to any one of claims 1 to 9;
a vehicle body (106);
a right front wheel;
a left front wheel (104F);
a right rear wheel; and
a left rear wheel (104R),
wherein the solenoid power reception coil (322) is a solenoid power reception coil (322) for a vehicle (100), which is coupled to a power storage device (110) that supplies power to a drive motor (108) that drives the vehicle (100), and
the electromagnetic shield (323) is relatively-unmovably supported with respect to the vehicle body (106).

13. A straddled vehicle (10) comprising:
the power reception device (32, 102) according to any one of claims 1 to 9;
a front wheel (14F);
a rear wheel (14R);
a saddle (18); and
a vehicle body frame (12),
wherein the straddled vehicle (10) is a straddled vehicle on which an occupant rides in a state in which the occupant straddles the saddle (18),
the solenoid power reception coil (322) is a solenoid power reception coil (322) for a straddled vehicle (10), which is coupled to a power storage device (221) that supplies power to a drive motor (20) that drives the straddled vehicle (10), and
the electromagnetic shield (323) is arranged on a front side or on a rear side of the straddled vehicle relative to the saddle (18) supported by the vehicle body frame (12).

14. A straddled vehicle comprising:
the power reception device (32, 102) according to any one of claims 1 to 9;
a front wheel (14F);
a rear wheel (14R);
a saddle (18); and
a vehicle body frame (12),
wherein the straddled vehicle (10) is a straddled vehicle on which an occupant rides in a state in which the occupant straddles the saddle (18),
the solenoid power reception coil (322) is a solenoid power reception coil (322) for a straddled vehicle (10), which is coupled to a power storage device (221) that supplies power to a drive motor (20) that drives the straddled vehicle (10), and
the electromagnetic shield (323) is relatively-unmovably supported with respect to the vehicle body frame (12).

## Patentansprüche

1. Eine Leistungsempfangsvorrichtung (32, 102), die folgende Merkmale aufweist:
eine Solenoidleistungsempfangsspule (322), wobei die Solenoidleistungsempfangsspule (322) dazu konfiguriert ist, einen elektrischen Stromfluss aufgrund einer Veränderung eines magnetischen Flusses zu erzeugen, der durch ein elektrisches Leiten hin zu einer Leistungsübertragungsspule (422), die in einer Leistungsübertragungsvorrichtung (42) vorgesehen ist, erzeugt wird; und
eine elektromagnetische Abschirmung (323), die derart angeordnet ist, dass zwischen der elektromagnetischen Abschirmung (323) und der Solenoidleistungsempfangsspule (322) ein Zwischenraum gebildet ist,
wobei die elektromagnetische Abschirmung (323) Folgendes umfasst:
einen flachplattenförmigen Hauptkörper (3231) und
eine Seitenwand, die aus der Sicht einer Richtung, die zu einer Oberfläche des Hauptkörpers (3231) senkrecht ist, um die Solenoidleistungsempfangsspule (322) herum angeordnet ist,
wobei
eine Richtung, die senkrecht zu einer axialen Linie der Solenoidleistungsempfangsspule (322) und parallel zu dem Hauptkörper (3231) ist, eine erste Richtung (F) ist,
eine Richtung, in der sich die axiale Linie der Solenoidleistungsempfangsspule (322) erstreckt, eine zweite Richtung (L) ist,
eine Richtung, die zu sowohl der ersten Richtung (F) als auch zu der zweiten Richtung (L) senkrecht ist, eine dritte Richtung (U) ist,
die Seitenwand folgende Merkmale umfasst:
ein Paar erster Seitenwände (3232, 3233), die sich auf beiden Seiten der Solenoidleistungsempfangsspule (322) in der ersten Richtung (F) befinden und von denen sich jede in der zweiten Richtung (L) und der dritten Richtung (U) erstreckt, und
ein Paar zweiter Seitenwände (3234, 3235), die sich auf beiden Seiten der Solenoidleistungsempfangsspule (322) in der zweiten Richtung (L) befinden und von denen sich jede in der ersten Richtung (F) und der dritten Richtung (U) erstreckt, und
ein Ende jeder des Paars erster Seitenwände (3232, 3233) in der zweiten Richtung (L) sich in der zweiten Richtung (L) weiter außen befindet als ein Ende der Solenoidleistungsempfangsspule (322) in der zweiten Richtung (L),
das andere Ende jeder des Paars erster Seitenwände (3232, 3233) in der zweiten Richtung (L) sich in der zweiten Richtung (L) weiter außen befindet als das andere Ende der Solenoidleistungsempfangsspule (322) in der zweiten Richtung (L),
ein Ende jeder des Paars zweiter Seitenwände (3234, 3235) in der ersten Richtung (F) sich in der ersten Richtung (F) weiter außen befindet als ein Ende der Solenoidleistungsempfangsspule (322) in der ersten Richtung (F),
das andere Ende jeder des Paars zweiter Seitenwände (3234, 3235) in der ersten Richtung (F) sich in der ersten Richtung (F) weiter außen befindet als das andere Ende der Solenoidleistungsempfangsspule (322) in der ersten Richtung (F),
ein Ende des Hauptkörpers (3231) in der ersten Richtung (F) sich in der ersten Richtung (F) weiter außen befindet als ein Ende der Solenoidleistungsempfangsspule (322) in der ersten Richtung (F),
das andere Ende des Hauptkörpers (3231) in der ersten Richtung (F) sich in der ersten Richtung (F) weiter außen befindet als das andere Ende der Solenoidleistungsempfangsspule (322) in der ersten Richtung (F),
ein Ende des Hauptkörpers (3231) in der zweiten Richtung (L) sich in der zweiten Richtung (L) weiter außen befindet als ein Ende der Solenoidleistungsempfangsspule (322) in der zweiten Richtung (L),
das andere Ende des Hauptkörpers (3231) in der zweiten Richtung (L) sich in der zweiten Richtung (L) weiter außen befindet als das andere Ende der Solenoidleistungsempfangsspule (322) in der zweiten Richtung (L),
ein kürzester Abstand (D21) von einer ersten Seitenwand (3232) des Paars erster Seitenwände (3232, 3233), die sich auf einer Endseite in der ersten Richtung (F) befindet, zu dem einem Ende der Solenoidleistungsempfangsspule (322) in der ersten Richtung (F), und ein kürzester Abstand (D22) von einer ersten Seitenwand (3233) des Paars erster Seitenwände (3232, 3233), die sich auf der anderen Endseite in der ersten Richtung (F) befindet, zu dem anderen Ende der Solenoidleistungsempfangsspule (322) in der ersten Richtung (F) kürzer sind als ein kürzester Abstand (D11) von einer zweiten Seitenwand (3234) des Paars zweiter Seitenwände (3234, 3235), die sich auf einer Endseite in der zweiten Richtung (L) befindet, zu dem einen Ende der Solenoidleistungsempfangsspule (322) in der zweiten Richtung (L), und ein kürzester Abstand (D12) von einer zweiten Seitenwand (3235) des Paars zweiter Seitenwände (3234, 3235), die sich auf der anderen Endseite in der zweiten Richtung (L) befindet, zu dem anderen Ende der Solenoidleistungsempfangsspule (322) in der zweiten Richtung (L),
der kürzeste Abstand (D21) von der ersten Seitenwand (3232) des Paars erster Seitenwände (3232, 3233), die sich auf der einen Endseite in der ersten Richtung (F) befindet, zu dem einem Ende der Solenoidleistungsempfangsspule (322) in der ersten Richtung (F), und der kürzeste Abstand (D22) von der ersten Seitenwand (3233) des Paars erster Seitenwände (3232, 3233), die sich auf der anderen Endseite in der ersten Richtung (F) befindet, zu dem anderen Ende der Solenoidleistungsempfangsspule (322) in der ersten Richtung (F) länger sind als ein kürzester Abstand (D31) von dem Hauptkörper (3231) zu der Solenoidleistungsempfangsspule (322), und
der kürzeste Abstand (D11) von der zweiten Seitenwand (3234) des Paars zweiter Seitenwände (3234, 3235), die sich auf der einen Endseite in der zweiten Richtung (L) befindet, zu dem einen Ende der Solenoidleistungsempfangsspule (322) in der zweiten Richtung (L), und der kürzeste Abstand (D12) von der zweiten Seitenwand (3235) des Paars zweiter Seitenwände (3234, 3235), die sich auf der anderen Endseite in der zweiten Richtung (L) befindet, zu dem anderen Ende der Solenoidleistungsempfangsspule (322) in der zweiten Richtung (L) länger sind als der kürzeste Abstand (D31) von dem Hauptkörper (3231) zu der Solenoidleistungsempfangsspule (322).

2. Die Leistungsempfangsvorrichtung (32, 102) gemäß Anspruch 1,
bei der die elektromagnetische Abschirmung (323) ferner Folgendes umfasst:
ein Verlängerungsstück (3236), das in zumindest einer des Paars erster Seitenwände (3232, 3233) vorgesehen ist und sich in einer Richtung, die die erste Richtung (F) ist, weg von der Solenoidleistungsempfangsspule (322) erstreckt.

3. Die Leistungsempfangsvorrichtung (32, 102) gemäß Anspruch 2, die ferner folgendes Merkmal aufweist:
ein Substrat (324), das aus der Sicht der dritten Richtung das Verlängerungsstück (3236) überlappt und auf dem eine Schaltung gebildet ist, die mit der Solenoidleistungsempfangsspule (322) gekoppelt ist.

4. Die Leistungsempfangsvorrichtung (32, 102) gemäß einem der Ansprüche 1 bis 3,
bei der zumindest eine des Paars erster Seitenwände (3232, 3233) von dem Paar zweiter Seitenwände (3234, 3235) getrennt ist.

5. Die Leistungsempfangsvorrichtung (32, 102) gemäß einem der Ansprüche 1 bis 4, bei der aus der Sicht der dritten Richtung (U) eine Länge jeder des Paars erster Seitenwände (3232, 3233) in der zweiten Richtung (L) länger ist als eine Länge jeder des Paars zweiter Seitenwände (3234, 3235) in der ersten Richtung (F).

6. Die Leistungsempfangsvorrichtung (32, 102) gemäß einem der Ansprüche 1 bis 5,
bei der eine Länge der Solenoidleistungsempfangsspule (322) in der zweiten Richtung (L) länger ist als eine Länge der Solenoidleistungsempfangsspule (322) in der ersten Richtung (F).

7. Die Leistungsempfangsvorrichtung (32, 102) gemäß einem der Ansprüche 1 bis 6,
bei der eine Länge der Solenoidleistungsempfangsspule (322) in der dritten Richtung (U) kürzer ist als eine Länge der Solenoidleistungsempfangsspule (322) in der ersten Richtung (F).

8. Die Leistungsempfangsvorrichtung (32, 102) gemäß einem der Ansprüche 1 bis 7, die ferner folgendes Merkmal aufweist:
einen Kern (3222), der in die Solenoidleistungsempfangsspule (322) eingefügt ist.

9. Die Leistungsempfangsvorrichtung (32, 102) gemäß Anspruch 8,
bei der ein kürzester Abstand (D13) von der zweiten Seitenwand (3234) des Paars zweiter Seitenwände (3234, 3235), die sich auf der einen Endseite in der zweiten Richtung (L) befindet, zu einem Ende des Kerns (3222) in der zweiten Richtung (L), und ein kürzester Abstand (D14) von der zweiten Seitenwand (3235) des Paars zweiter Seitenwände (3234, 3235), die sich auf der anderen Endseite in der zweiten Richtung (L) befindet, zu dem anderen Ende des Kerns (3222) in der zweiten Richtung (L) länger sind als ein kürzester Abstand (D21) von der ersten Seitenwand (3232) des Paars erster Seitenwände (3232, 3233), die sich auf der einen Endseite in der ersten Richtung (F) befindet, zu dem einen Ende der Solenoidleistungsempfangsspule (322) in der ersten Richtung (F), und ein kürzester Abstand (D22) von der ersten Seitenwand (3233) des Paars erster Seitenwände (3232, 3233), die sich auf der anderen Endseite in der ersten Richtung (F) befindet, zu dem anderen Ende der Solenoidleistungsempfangsspule (322) in der ersten Richtung (F).

10. Ein Fahrzeug (100), das folgende Merkmale aufweist:
die Leistungsempfangsvorrichtung (32, 102) gemäß einem der Ansprüche 1 bis 9;
ein rechtes Vorderrad;
ein linkes Vorderrad (104F);
ein rechtes Hinterrad; und
ein linkes Hinterrad (104R),
wobei die Solenoidleistungsempfangsspule (322) eine Solenoidleistungsempfangsspule (322) für ein Fahrzeug ist, die mit einer Leistungsspeicherungsvorrichtung (110) gekoppelt ist, die einem Antriebsmotor (108), der das Fahrzeug (100) antreibt, Leistung zuführt, und
das Paar erster Seitenwände (3232, 3233), die in der elektromagnetischen Abschirmung (323) enthalten sind, entlang entweder einer vorderen Richtung, einer rechten Richtung oder einer oberen Richtung des Fahrzeugs (100) nebeneinander angeordnet ist.

11. Ein Fahrzeug (100), das folgende Merkmale aufweist:
die Leistungsempfangsvorrichtung (32, 102) gemäß einem der Ansprüche 1 bis 9;
ein rechtes Vorderrad;
ein linkes Vorderrad (104F);
ein rechtes Hinterrad; und
ein linkes Hinterrad (104R),
wobei die Solenoidleistungsempfangsspule (322) eine Solenoidleistungsempfangsspule (322) für ein Fahrzeug ist, die mit einer Leistungsspeicherungsvorrichtung (110) gekoppelt ist, die einem Antriebsmotor (108), der das Fahrzeug (100) antreibt, Leistung zuführt, und
entweder das Paar erster Seitenwände (3232, 3233) oder das Paar zweiter Seitenwände (3234, 3235), die in der elektromagnetischen Abschirmung (323) enthalten sind, das aus der Sicht der dritten Richtung (U) am längsten ist, entlang entweder einer vorderen Richtung, einer rechten Richtung oder einer oberen Richtung des Fahrzeugs (100) angeordnet ist.

12. Ein Fahrzeug (100), das folgende Merkmale aufweist:
die Leistungsempfangsvorrichtung (32, 102) gemäß einem der Ansprüche 1 bis 9;
eine Fahrzeugkarosserie (106);
ein rechtes Vorderrad;
ein linkes Vorderrad (104F);
ein rechtes Hinterrad; und
ein linkes Hinterrad (104R),
wobei die Solenoidleistungsempfangsspule (322) eine Solenoidleistungsempfangsspule (322) für ein Fahrzeug (100) ist, die mit einer Leistungsspeicherungsvorrichtung (110) gekoppelt ist, die einem Antriebsmotor (108), der das Fahrzeug (100) antreibt, Leistung zuführt, und
die elektromagnetische Abschirmung (323) bezüglich der Fahrzeugkarosserie (106) relativ unbeweglich getragen wird.

13. Ein rittlings zu fahrendes Fahrzeug (10), das folgende Merkmale aufweist:
die Leistungsempfangsvorrichtung (32, 102) gemäß einem der Ansprüche 1 bis 9;
ein Vorderrad (14F);
ein Hinterrad (14R);
einen Sattel (18); und
einen Fahrzeugkarosserierahmen (12),
wobei das rittlings zu fahrende Fahrzeug (10) ein rittlings zu fahrendes Fahrzeug ist, auf dem ein Fahrer in einem Zustand fährt, in dem der Fahrer rittlings auf dem Sattel (18) sitzt,
die Solenoidleistungsempfangsspule (322) eine Solenoidleistungsempfangsspule (322) für ein rittlings zu fahrendes Fahrzeug (10) ist, die mit einer Leistungsspeicherungsvorrichtung (221) gekoppelt ist, die einem Antriebsmotor (20), der das rittlings zu fahrende Fahrzeug (10) antreibt, Leistung zuführt, und
die elektromagnetische Abschirmung (323) auf einer Vorderseite oder auf einer Rückseite des rittlings zu fahrenden Fahrzeugs relativ zu dem durch den Fahrzeugkarosserierahmen (12) getragenen Sattel (18) angeordnet ist.

14. Ein rittlings zu fahrendes Fahrzeug, das folgende Merkmale aufweist:
die Leistungsempfangsvorrichtung (32, 102) gemäß einem der Ansprüche 1 bis 9;
ein Vorderrad (14F);
ein Hinterrad (14R);
einen Sattel (18); und
einen Fahrzeugkarosserierahmen (12),
wobei das rittlings zu fahrende Fahrzeug (10) ein rittlings zu fahrendes Fahrzeug ist, auf dem ein Fahrer in einem Zustand fährt, in dem der Fahrer rittlings auf dem Sattel (18) sitzt,
die Solenoidleistungsempfangsspule (322) eine Solenoidleistungsempfangsspule (322) für ein rittlings zu fahrendes Fahrzeug (10) ist, die mit einer Leistungsspeicherungsvorrichtung (221) gekoppelt ist, die einem Antriebsmotor (20), der das rittlings zu fahrende Fahrzeug (10) antreibt, Leistung zuführt, und
die elektromagnetische Abschirmung (323) bezüglich des Fahrzeugkarosserierahmens (12) relativ unbeweglich getragen wird.

## Revendications

1. Dispositif de réception d'énergie (32, 102), comprenant:
une bobine de réception de force magnétique (322), la bobine de réception de force magnétique (322) étant configurée pour générer un flux de courant électrique par suite d'une variation de flux magnétique qui est généré par conduction électrique vers une bobine de transmission d'énergie (422) prévue dans un dispositif de transmission d'énergie (42); et
un blindage électromagnétique (323) disposé de sorte que soit formé un entrefer entre le blindage électromagnétique (323) et la bobine de réception de force magnétique (322),
dans lequel le blindage électromagnétique (323) comporte
un corps principal en forme de plaque plane (3231), et
une paroi latérale disposée autour de la bobine de réception de force magnétique (322) lorsque vue dans une direction qui est perpendiculaire à une surface du corps principal (3231),
dans lequel
une direction qui est perpendiculaire à une ligne axiale de la bobine de réception de force magnétique (322) et qui est parallèle au corps principal (3231) est une première direction (F),
une direction dans laquelle s'étend la ligne axiale de la bobine de réception de force magnétique (322) est une deuxième direction (L),
une direction qui est perpendiculaire à chacune de la première direction (F) et de la deuxième direction (L) est une troisième direction (U),
la paroi latérale comporte
une paire de premières parois latérales (3232, 3233) qui sont situées des deux côtés de la bobine de réception de force magnétique (322) dans la première direction (F) et dont chacune s'étend dans la deuxième direction (L) et la troisième direction (U), et
une paire de deuxièmes parois latérales (3234, 3235) qui sont situées des deux côtés de la bobine de réception de force magnétique (322) dans la deuxième direction (L) et dont chacune s'étend dans la première direction (F) et la troisième direction (U), et
une extrémité de chacune de la paire de premières parois latérales (3232, 3233) dans la deuxième direction (L) est située plus à l'extérieur dans la deuxième direction (L) qu'une extrémité de la bobine de réception de force magnétique (322) dans la deuxième direction (L),
l'autre extrémité de chacune de la paire de premières parois latérales (3232, 3233) dans la deuxième direction (L) est située plus à l'extérieur dans la deuxième direction (L) que l'autre extrémité de la bobine de réception de force magnétique (322) dans la deuxième direction (L),
une extrémité de chacune de la paire de deuxièmes parois latérales (3234, 3235) dans la première direction (F) est située plus à l'extérieur dans la première direction (F) qu'une extrémité de la bobine de réception de force magnétique (322) dans la première direction (F),
l'autre extrémité de chacune de la paire de deuxièmes parois latérales (3234, 3235) dans la première direction (F) est située plus à l'extérieur dans la première direction (F) que l'autre extrémité de la bobine de réception de force magnétique (322) dans la première direction (F),
une extrémité du corps principal (3231) dans la première direction (F) est située plus à l'extérieur dans la première direction (F) qu'une extrémité de la bobine de réception de force magnétique (322) dans la première direction (F),
l'autre extrémité du corps principal (3231) dans la première direction (F) est située plus à l'extérieur dans la première direction (F) que l'autre extrémité de la bobine de réception de force magnétique (322) dans la première direction (F),
une extrémité du corps principal (3231) dans la deuxième direction (L) est située plus à l'extérieur dans la deuxième direction (L) qu'une extrémité de la bobine de réception de force magnétique (322) dans la deuxième direction (L),
l'autre extrémité du corps principal (3231) dans la deuxième direction (L) est située plus à l'extérieur dans la deuxième direction (L) que l'autre extrémité de la bobine de réception de force magnétique (322) dans la deuxième direction (L),
une distance la plus courte (D21) d'une première paroi latérale (3232) de la paire de premières parois latérales (3232, 3233) qui est située d'un côté d'extrémité dans la première direction (F) à l'une extrémité de la bobine de réception de force magnétique (322) dans la première direction (F) et une distance la plus courte (D22) d'une première paroi latérale (3233) de la paire de premières parois latérales (3232, 3233) qui est située de l'autre côté d'extrémité dans la première direction (F) à l'autre extrémité de la bobine de réception de force magnétique (322) dans la première direction (F) sont plus courtes qu'une distance la plus courte (D11) d'une deuxième paroi latérale (3234) de la paire de deuxièmes parois latérales (3234, 3235) qui est située d'un côté d'extrémité dans la deuxième direction (L) à l'une extrémité de la bobine de réception de force magnétique (322) dans la deuxième direction (L) et qu'une distance la plus courte (D12) d'une deuxième paroi latérale (3235) de la paire de deuxièmes parois latérales (3234, 3235) qui est située de l'autre côté d'extrémité dans la deuxième direction (L) à l'autre extrémité de la bobine de réception de force magnétique (322) dans la deuxième direction (L),
la distance la plus courte (D21) de la première paroi latérale (3232) de la paire de premières parois latérales (3232, 3233) qui est située de l'un côté d'extrémité dans la première direction (F) à l'une extrémité de la bobine de réception de force magnétique (322) dans la première direction (F) et la distance la plus courte (D22) de la première paroi latérale (3233) de la paire de premières parois latérales (3232, 3233) qui est située de l'autre côté d'extrémité dans la première direction (F) à l'autre extrémité de la bobine de réception de force magnétique (322) dans la première direction (F) sont plus longues qu'une distance la plus courte (D31) du corps principal (3231) à la bobine de réception de force magnétique (322), et
la distance la plus courte (D11) de la deuxième paroi latérale (3234) de la paire de deuxièmes parois latérales (3234, 3235) qui est située de l'un côté d'extrémité dans la deuxième direction (L) à l'une extrémité de la bobine de réception de force magnétique (322) dans la deuxième direction (L) et la distance la plus courte (D12) de la deuxième paroi latérale (3235) de la paire de deuxièmes parois latérales (3234, 3235) qui est située de l'autre côté d'extrémité dans la deuxième direction (L) à l'autre extrémité de la bobine de réception de force magnétique (322) dans la deuxième direction (L) sont plus longues que la distance la plus courte (D31) du corps principal (3231) à la bobine de réception de force magnétique (322).

2. Dispositif de réception d'énergie (32, 102) selon la revendication 1,
dans lequel le blindage électromagnétique (323) comporte par ailleurs
une pièce d'extension (3236) qui est prévue dans au moins l'une de la paire de premières parois latérales (3232, 3233) et qui s'étend éloignée de la bobine de réception de force magnétique (322) dans une direction qui est la première direction (F).

3. Dispositif de réception d'énergie (32, 102) selon la revendication 2, comprenant par ailleurs:
un substrat (324) qui vient en chevauchement avec la pièce d'extension (3236) lorsque vu dans la troisième direction (U) et sur lequel est formé un circuit qui est couplé à la bobine de réception de force magnétique (322).

4. Dispositif de réception d'énergie (32, 102) selon l'une quelconque des revendications 1 à 3,
dans lequel au moins l'une de la paire de premières parois latérales (3232, 3233) est séparée de la paire de deuxièmes parois latérales (3234, 3235).

5. Dispositif de réception d'énergie (32, 102) selon l'une quelconque des revendications 1 à 4,
dans lequel, lorsque vue dans la troisième direction (U), une longueur de chacune de la paire de premières parois latérales (3232, 3233) dans la deuxième direction (L) est plus longue qu'une longueur de chacune de la paire de deuxièmes parois latérales (3234, 3235) dans la première direction (F).

6. Dispositif de réception d'énergie (32, 102) selon l'une quelconque des revendications 1 à 5,
dans lequel une longueur de la bobine de réception de force magnétique (322) dans la deuxième direction (L) est plus longue qu'une longueur de la bobine de réception de force magnétique (322) dans la première direction (F).

7. Dispositif de réception d'énergie (32, 102) selon l'une quelconque des revendications 1 à 6,
dans lequel une longueur de la bobine de réception de force magnétique (322) dans la troisième direction (U) est plus courte qu'une longueur de la bobine de réception de force magnétique (322) dans la première direction (F).

8. Dispositif de réception d'énergie (32, 102) selon l'une quelconque des revendications 1 à 7, comprenant par ailleurs:
un noyau (3222) inséré dans la bobine de réception de force magnétique (322).

9. Dispositif de réception d'énergie (32, 102) selon la revendication 8,
dans lequel une distance la plus courte (D13) de la deuxième paroi latérale (3234) de la paire de deuxièmes parois latérales (3234, 3235) qui est située de l'un côté d'extrémité dans la deuxième direction (L) à une extrémité du noyau (3222) dans la deuxième direction (L) et une distance la plus courte (D14) de la deuxième paroi latérale (3235) de la paire de deuxièmes parois latérales (3234, 3235) qui est située de l'autre côté d'extrémité dans la deuxième direction (L) à l'autre extrémité du noyau (3222) dans la deuxième direction (L) sont plus longues que la distance la plus courte (D21) de la première paroi latérale (3232) de la paire de premières parois latérales (3232, 3233) qui est située de l'un côté d'extrémité dans le première direction (F) à l'une extrémité de la bobine de réception de force magnétique (322) dans la première direction (F) et qu'une distance la plus courte (D22) de la première paroi latérale (3233) de la paire de premières parois latérales (3232, 3233) qui est située de l'autre côté d'extrémité dans la première direction (F) à l'autre extrémité de la bobine de réception de force magnétique (322) dans la première direction (F).

10. Véhicule (100), comprenant:
le dispositif de réception d'énergie (32, 102) selon l'une quelconque des revendications 1 à 9;
une roue avant droite;
une roue avant gauche (104F);
une roue arrière droite; et
une roue arrière gauche (104R),
dans lequel la bobine de réception de force magnétique (322) est une bobine de réception de force magnétique (322) pour un véhicule qui est couplée à un dispositif d'accumulation d'énergie (110) qui alimente de l'énergie vers un moteur d'entraînement (108) qui entraîne le véhicule (100), et
la paire de premières parois latérales (3232, 3233) incluse dans le blindage électromagnétique (323) est disposée côte à côte dans l'une parmi une direction vers l'avant, une direction à droite, une direction vers le haut du véhicule (100).

11. Véhicule (100), comprenant:
le dispositif de réception d'énergie (32, 102) selon l'une quelconque des revendications 1 à 9;
une roue avant droite;
une roue avant gauche (104F);
une roue arrière droite; et
une roue arrière gauche (104R),
dans lequel la bobine de réception de force magnétique (322) est une bobine de réception de force magnétique (322) pour un véhicule qui est couplée à un dispositif d'accumulation d'énergie (110) qui alimente de l'énergie vers un moteur d'entraînement (108) qui entraîne le véhicule (100), et
l'une de la paire de premières parois latérales (3232, 3233) et de la paire de deuxièmes parois latérales (3234, 3235) incluses dans le blindage électromagnétique (323), qui est la plus longue lorsque vue dans la troisième direction (U), est disposée dans l'une parmi une direction en avant, une direction à droite et une direction vers le haut du véhicule (100).

12. Véhicule (100), comprenant:
le dispositif de réception d'énergie (32, 102) selon l'une quelconque des revendications 1 à 9;
une carrosserie de véhicule (106);
une roue avant droite;
une roue avant gauche (104F);
une roue arrière droite; et
une roue arrière gauche (104R),
dans lequel la bobine de réception de force magnétique (322) est une bobine de réception de force magnétique (322) pour un véhicule (100) qui est couplée à un dispositif d'accumulation d'énergie (110) qui alimente de l'énergie vers un moteur d'entraînement (108) qui entraîne le véhicule (100), et
le blindage électromagnétique (323) est supporté de manière relativement immobile par rapport à la carrosserie de véhicule (106).

13. Véhicule à selle (10), comprenant:
le dispositif de réception d'énergie (32, 102) selon l'une quelconque des revendications 1 à 9;
une roue avant (14F);
une roue arrière (14R);
une selle (18); et
un châssis de carrosserie de véhicule (12),
dans lequel le véhicule à selle (10) est un véhicule à selle que conduit un occupant dans un état dans lequel l'occupant enfourche la selle (18),
la bobine de réception de force magnétique (322) est une bobine de réception de force magnétique (322) pour un véhicule à selle (10) qui est couplée à un dispositif d'accumulation d'énergie (221) qui alimente de l'énergie vers un moteur d'entraînement (20) qui entraîne le véhicule à selle (10), et
le blindage électromagnétique (323) est disposé d'un côté avant ou d'un côté arrière du véhicule à selle par rapport à la selle (18) supportée par le châssis de carrosserie de véhicule (12).

14. Véhicule à selle, comprenant:
le dispositif de réception d'énergie (32, 102) selon l'une quelconque des revendications 1 à 9;
une roue avant (14F);
une roue arrière (14R);
une selle (18); et
un châssis de carrosserie de véhicule (12),
dans lequel le véhicule à selle (10) est un véhicule à selle que conduit un occupant dans un état dans lequel l'occupant enfourche la selle (18),
la bobine de réception de force magnétique (322) est une bobine de réception de force magnétique (322) pour un véhicule à selle (10) qui est couplée à un dispositif d'accumulation d'énergie (221) qui alimente de l'énergie vers un moteur d'entraînement (20) qui entraîne le véhicule à selle (10), et
le blindage électromagnétique (323) est supporté de manière relativement immobile par rapport au châssis de carrosserie de véhicule (12).
